# EUROPEAN PATENT APPLICATION

(11) **EP 4 808 022 A1**
(43) Date of publication of application: **16.09.2026**
(21) Application number: 24896483.5
(22) Date of filing: 25.11.2024
(51) Int. Cl.: H04L 1/00

(54) **DATA PROCESSING METHOD AND APPARATUS**

(30) Priority: 30.11.2023 CN 202311654455
(71) Applicant: Huawei Technologies Co., Ltd., Shenzhen, Guangdong 518129 (CN)
(72) Inventor: XIAO, Jie, Shenzhen, Guangdong 518129 (CN); XU, Li, Shenzhen, Guangdong 518129 (CN); SUN, Peng, Shenzhen, Guangdong 518129 (CN); QI, Yunlei, Shenzhen, Guangdong 518129 (CN); HU, Jun, Shenzhen, Guangdong 518129 (CN)
(74) Representative: Maiwald GmbH
(86) International application number: PCT/CN2024/134317
(87) International publication number: WO 2025/113394

(57) **Abstract**

A data processing method and apparatus are provided, and pertain to the field of communication technologies. The method is applied to the flexible Ethernet (flexible Ethernet, FlexE). The method includes: receiving an initial data stream sent by a FlexE instance, and periodically inserting a pad sequence into the initial data stream, to obtain a first data stream, where the first data stream includes the pad sequence that periodically appears, the pad sequence includes n consecutive pad blocks, and n is an integer greater than or equal to 4. This application provides a FlexE-oriented method for inserting a large quantity of pad blocks into a data stream, is applicable to a PHY interface of a higher rate such as an 800 gigabit Ethernet (gigabyte Ethernet, GE) PHY interface or a 1.6TE PHY interface, and can adapt to evolution of an Ethernet standard.

## Description

This application claims priority to Chinese Patent Application No. 202311654455.0, filed on November 30, 2023, and entitled "DATA PROCESSING METHOD AND APPARATUS", which is incorporated herein by reference in its entirety.

### TECHNICAL FIELD

This application relates to the field of communication technologies, and in particular, to a data processing method and apparatus.

### BACKGROUND

In the communication field, in the Ethernet (Ethernet) technology, to implement functions such as multi-channel alignment and block delimitation at a physical layer (physical layer, PHY), an alignment marker (alignment marker, AM) is inserted. Specifically, a PHY interface at a transmitting end periodically inserts an AM block into a data stream and sends the data stream including the AM block. After receiving the data stream including the AM block, a PHY interface at a receiving end finds and deletes the AM block in the data stream, and then sends a remaining block to an upper layer for processing. Generally, PHY interfaces of different rates insert AM blocks into data streams at different ratios. For example, according to a current standard, an AM insertion ratio of a 100 gigabit Ethernet (gigabyte Ethernet, GE) PHY interface is 1/16384 (that is, a PHY interface of a rate of 100GE inserts one AM block in a data stream after every 16383 blocks), AM insertion ratios of a 50GE PHY interface, a 200GE PHY interface, a 400GE PHY interface, and an 800GE PHY interface are all 1/20480, and an AM insertion ratio of a 1.6-terabit Ethernet (terabit Ethernet, TE) PHY interface is 1/81920.

The flexible Ethernet (flexible Ethernet, FlexE) protocol is a standard protocol defined by the Optical Internetworking Forum (Optical Internetworking Forum, OIF) standardization organization. The FlexE protocol introduces a concept of a FlexE port. One FlexE port includes several 50GE PHY interfaces, 100GE PHY interfaces, 200GE PHY interfaces, and/or 400GE PHY interfaces, and may also include 800GE PHY interfaces, 1.6TE PHY interfaces, or the like in the future. An available bandwidth of the FlexE port is a sum of available bandwidths provided by the PHY interfaces in the FlexE port for the FlexE port. An available bandwidth provided by a PHY interface for the FlexE port is a bandwidth obtained by deducting AM overheads (that is, a bandwidth occupied by an AM block) from a bandwidth of the PHY interface. Because AM insertion ratios of PHY interfaces of different rates are different, the PHY interfaces of different rates provide different available bandwidths for the FlexE port. To enable interworking between FlexE ports including PHY interfaces of different rates, a pad (pad) block needs to be inserted into a data stream sent by a FlexE port with a higher available bandwidth for padding, to reduce an available bandwidth of the FlexE port.

In a pad block insertion method defined in a current FlexE standard, a transmitting end inserts two pad blocks into a data stream after every 163830 blocks. However, the pad block insertion method defined in the current FlexE standard is mainly oriented to a 50GE PHY interface, a 200GE PHY interface, and a 400GE PHY interface. With evolution of an Ethernet standard, a rate of a PHY interface continuously increases to 800GE, 1.6TE, and the like. The pad block insertion method defined in the current FlexE standard is difficult to apply to a PHY interface of a higher rate such as an 800GE PHY interface or a 1.6TE PHY interface.

### SUMMARY

This application provides a data processing method and apparatus. The technical solutions of this application are oriented to FlexE, and a large quantity of pad blocks can be inserted into a data stream, so that the technical solutions are applicable to a PHY interface of a higher rate such as an 800GE PHY interface or a 1.6TE PHY interface, and can adapt to evolution of an Ethernet standard. The solutions of this application are as follows:
According to a first aspect, a data processing method is provided, and is applied to FlexE. The method includes: receiving an initial data stream sent by a FlexE instance; and periodically inserting a pad sequence into the initial data stream, to obtain a first data stream, where the first data stream includes the pad sequence that periodically appears, the pad sequence includes n consecutive pad blocks, and n is an integer greater than or equal to 4.

The data processing method may be performed by a FlexE shim at a transmitting end, and is specifically performed by a pad processing module in the FlexE shim.

According to the technical solution provided in this application, the pad sequence periodically inserted into the initial data stream includes the n consecutive pad blocks, where n is an integer greater than or equal to 4. It can be learned that this application provides a FlexE-oriented method for inserting a large quantity of pad blocks into a data stream, is applicable to a PHY interface of a higher rate such as an 800GE PHY interface or a 1.6TE PHY interface, and can adapt to evolution of an Ethernet standard.

According to a second aspect, a data processing method is provided, and is applied to FlexE. The method includes: receiving an initial data stream, where the initial data stream is obtained by interleaving a plurality of data streams sent by a plurality of FlexE instances; and periodically inserting a pad sequence into the initial data stream, to obtain a first data stream, where the first data stream includes the pad sequence that periodically appears, the pad sequence includes n consecutive pad blocks, and n is an integer greater than or equal to 16.

The data processing method may be performed by a FlexE shim at a transmitting end, and is specifically performed by a pad processing module in the FlexE shim.

According to the technical solution provided in this application, the pad sequence periodically inserted into the initial data stream includes the n consecutive pad blocks, where n is an integer greater than or equal to 16. It can be learned that this application provides a FlexE-oriented method for inserting a large quantity of pad blocks into a data stream, is applicable to a PHY interface of a higher rate such as an 800GE PHY interface or a 1.6TE PHY interface, and can adapt to evolution of an Ethernet standard.

Optionally, in the first aspect and the second aspect, the n pad blocks include x first pad blocks and y second pad blocks, the first pad block is a control block that is globally unique in the first data stream, the second pad block is an error (error) block, x is a positive integer, and y is a positive integer. For example, the first pad block is a P1 block in the current FlexE standard, and the second pad block is a P2 block in the current FlexE standard.

According to the technical solution provided in this application, the pad sequence inserted by the FlexE shim at the transmitting end into the initial data stream includes the globally unique first pad block, to facilitate searching for the first pad block by a FlexE shim at a receiving end, and further searching for the pad sequence based on the first pad block. Because the first pad block is a P1 block in the current FlexE standard, and the second pad block is a P2 block in the current FlexE standard, the technical solution provided in this application can better inherit a pad encapsulation format in the current FlexE standard, and implementation is simple.

Optionally, in the first aspect and the second aspect, the n pad blocks include the x first pad blocks and the y second pad blocks, and the x first pad blocks and the y second pad blocks satisfy any one of the following:
x=1, y=n-1, the y second pad blocks are located after the first pad block, and the y second pad blocks are consecutive to the first pad block;
n is an even number, x=y=n/2, the y second pad blocks are located after the x first pad blocks, and the y second pad blocks are consecutive to the x first pad blocks;
n is an even number, x=y=n/2, the pad sequence includes n/2 block groups, each block group includes one first pad block and one second pad block, the second pad block is located after the first pad block and is consecutive to the first pad block in each block group, and pad blocks in the n/2 block groups are consecutive; or
the x first pad blocks include x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x1 and x2 are both positive integers.

Optionally, in the first aspect and the second aspect, the n pad blocks include the x first pad blocks and the y second pad blocks, the n pad blocks further include z third pad blocks, and z is a positive integer; and
the y second pad blocks are located after the x first pad blocks and before the z third pad blocks, and the x first pad blocks, the y second pad blocks, and the z third pad blocks are consecutive; or
the z third pad blocks are located after the x first pad blocks and before the y second pad blocks, and the x first pad blocks, the z third pad blocks, and the y second pad blocks are consecutive.

Optionally, in the first aspect and the second aspect, the third pad block is a data block.

In the technical solution provided in this application, because the third pad block is a data block, and the first pad block and the second pad block are both control blocks, when the n consecutive pad blocks in the pad sequence include the x first pad blocks, the y second pad blocks, and the z third pad blocks, the z third pad blocks are set between the x first pad blocks and the y second pad blocks, so that the z third pad blocks are not adjacent to an actual data block in the first data stream. This can avoid confusion between the third pad block and the actual data block in the first data stream, and can avoid pollution caused by the third pad block to the actual data block in the first data stream.

Optionally, in the first aspect and the second aspect, the third pad block includes at least one block identifier. For example, the at least one block identifier is a plurality of block identifiers.

In the technical solution provided in this application, because the third pad block includes the at least one block identifier, in a process of searching for the third pad block, the FlexE shim at the receiving end can identify the third pad block only by identifying the block identifier in the third pad block, so that a process of searching for the third pad block by the FlexE shim at the receiving end can be simplified. When the third pad block includes a plurality of block identifiers, even if a bit error occurs in some identifiers in the plurality of block identifiers in a process of transmitting the third pad block, the FlexE shim at the receiving end can still find the third pad block based on a correct block identifier in the plurality of block identifiers. This can improve fault tolerance in searching for the third pad block by the FlexE shim at the receiving end.

In this application, the third pad block is set to include the block identifier, so that a dependency relationship between pad blocks in the pad sequence is reduced. Even if some pad blocks in the pad sequence are incorrect, searching for the pad sequence in the first data stream by the FlexE shim at the receiving end is not affected.

Optionally, in the first aspect and the second aspect, the third pad block further includes at least one check identifier, and the at least one check identifier is used to check correctness of the at least one block identifier in the third pad block. That is, the third pad block includes the at least one block identifier and the at least one check identifier. For example, the third pad block includes a plurality of block identifiers and a plurality of check identifiers.

In the technical solution provided in this application, because the third pad block includes the at least one block identifier and the at least one check identifier, in a process of searching for the third pad block, the FlexE shim at the receiving end can check correctness of the at least one block identifier based on the at least one check identifier, to identify the third pad block based on a correct block identifier in the at least one check identifier. This can simplify a process of searching for the third pad block by the FlexE shim at the receiving end. When the third pad block includes the plurality of block identifiers and the plurality of check identifiers, even if a bit error occurs in some identifiers in the plurality of block identifiers and/or the plurality of check identifiers in a process of transmitting the third pad block, the FlexE shim at the receiving end can still check correctness of the plurality of block identifiers based on a correct check identifier in the plurality of check identifiers, to find the third pad block based on a correct block identifier in the plurality of block identifiers. This improves fault tolerance in searching for the third pad block by the FlexE shim at the receiving end.

Optionally, in the first aspect and the second aspect, in the third pad block, a quantity of the at least one block identifier is equal to a quantity of the at least one check identifier; or a sum of the quantity of the at least one block identifier and the quantity of the at least one check identifier is an odd number.

In the technical solution provided in this application, the quantity of block identifiers is set to be equal to the quantity of check identifiers in the third pad block, or the sum of the quantity of block identifiers and the quantity of check identifiers is set to an odd number, to facilitate searching for the third pad block by the FlexE shim at the receiving end. For example, for any third pad block, when a quantity of block identifiers is equal to a quantity of check identifiers in the third pad block, the block identifiers may be in one-to-one correspondence with the check identifiers in the third pad block, and each check identifier is used to check correctness of a corresponding block identifier. When check on at least one block identifier in the third pad block succeeds, the FlexE shim at the receiving end considers that the at least one block identifier is correct, and the FlexE shim at the receiving end considers that the third pad block is successfully identified, that is, considers that the third pad block is found. For another example, for any third pad block, when a sum of a quantity of block identifiers and a quantity of check identifiers in the third pad block is an odd number, in a process of searching for the third pad block by the FlexE shim at the receiving end, if the FlexE shim at the receiving end determines that a sum of a quantity of correct block identifiers and a quantity of correct check identifiers in the third pad block exceeds a half of the sum of the quantity of block identifiers and the quantity of check identifiers in the third pad block, the FlexE shim at the receiving end considers that the third pad block is successfully identified, that is, considers that the third pad block is found. Optionally, when the sum of the quantity of block identifiers and the quantity of check identifiers in the third pad block is an odd number, the half of the sum of the quantity of block identifiers and the quantity of check identifiers in the third pad block is not an integer. In this case, the half of the sum of the quantity of block identifiers and the quantity of check identifiers in the third pad block may be rounded up for identification and determining.

According to a third aspect, a data processing method is provided, and is applied to FlexE. The method includes: obtaining a first data stream, where the first data stream is one of a plurality of data streams obtained by de-interleaving, the first data stream includes a pad sequence that periodically appears, the pad sequence includes n consecutive pad blocks, and n is an integer greater than or equal to 4; searching the first data stream for a pad block, to find the pad sequence; and when a plurality of pad blocks consecutively found in the first data stream satisfy a preset condition, determining that the pad sequence is found, where the preset condition includes: a quantity of the plurality of pad blocks is greater than a preset threshold, and the quantity of the plurality of pad blocks is less than or equal to n.

The data processing method may be performed by a FlexE shim at a receiving end, and is specifically performed by a pad processing module in the FlexE shim.

According to the technical solution provided in this application, because the first data stream includes the pad sequence that periodically appears, the pad sequence includes the n consecutive pad blocks, and n is an integer greater than or equal to 4, this application provides a FlexE-oriented method for inserting a large quantity of pad blocks into a data stream, is applicable to a PHY interface of a higher rate such as an 800GE PHY interface or a 1.6TE PHY interface, and can adapt to evolution of an Ethernet standard. When the quantity of the plurality of pad blocks consecutively found in the first data stream is greater than the preset threshold and is less than or equal to n, the FlexE shim at the receiving end determines that the pad sequence is found, and it is not required that the quantity of the plurality of pad blocks consecutively found is definitely equal to n, that is, not all pad blocks in the pad sequence need to be correctly detected. Therefore, this application provides a method for searching for the pad sequence by soft decision. A process of searching for the pad sequence by the FlexE shim at the receiving end is relaxed, a fault tolerance capability of searching for the pad sequence is good, and a success probability of searching for the pad sequence can be maintained without degradation.

According to a fourth aspect, a data processing method is provided, and is applied to FlexE. The method includes: obtaining a first data stream, where the first data stream is obtained by periodically inserting a pad sequence into an initial data stream, the initial data stream is obtained by interleaving a plurality of data streams sent by a plurality of FlexE instances, the first data stream includes the pad sequence that periodically appears, the pad sequence includes n consecutive pad blocks, and n is an integer greater than or equal to 16; searching the first data stream for a pad block, to find the pad sequence; and when a plurality of pad blocks consecutively found in the first data stream satisfy a preset condition, determining that the pad sequence is found, where the preset condition includes: a quantity of the plurality of pad blocks is greater than a preset threshold, and the quantity of the plurality of pad blocks is less than or equal to n.

The data processing method may be performed by a FlexE shim at a receiving end, and is specifically performed by a pad processing module in the FlexE shim.

According to the technical solution provided in this application, because the first data stream includes the pad sequence that periodically appears, the pad sequence includes the n consecutive pad blocks, and n is an integer greater than or equal to 16, this application provides a FlexE-oriented method for inserting a large quantity of pad blocks into a data stream, is applicable to a PHY interface of a higher rate such as an 800GE PHY interface or a 1.6TE PHY interface, and can adapt to evolution of an Ethernet standard. When the quantity of the plurality of pad blocks consecutively found in the first data stream is greater than the preset threshold and is less than or equal to n, the FlexE shim at the receiving end determines that the pad sequence is found and it is not required that the quantity of the plurality of pad blocks consecutively found is definitely equal to n, that is, not all pad blocks in the pad sequence need to be correctly detected. Therefore, this application provides a method for searching for the pad sequence by soft decision. A process of searching for the pad sequence by the FlexE shim at the receiving end is relaxed, a fault tolerance capability of searching for the pad sequence is good, and a success probability of searching for the pad sequence can be maintained without degradation.

Optionally, in the third aspect and the fourth aspect, the n pad blocks include x first pad blocks and y second pad blocks, the first pad block is a control block that is globally unique in the first data stream, the second pad block is an error block, x is a positive integer, and y is a positive integer.

Optionally, in the third aspect and the fourth aspect, the n pad blocks include the x first pad blocks and the y second pad blocks, and the x first pad blocks and the y second pad blocks satisfy any one of the following:
x=1, y=n-1, the y second pad blocks are located after the first pad block, and the y second pad blocks are consecutive to the first pad block;
n is an even number, x=y=n/2, the y second pad blocks are located after the x first pad blocks, and the y second pad blocks are consecutive to the x first pad blocks;
n is an even number, x=y=n/2, the pad sequence includes n/2 block groups, each block group includes one first pad block and one second pad block, the second pad block is located after the first pad block and is consecutive to the first pad block in each block group, and pad blocks in the n/2 block groups are consecutive; or
the x first pad blocks include x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x1 and x2 are both positive integers.

Optionally, in the third aspect and the fourth aspect, the n pad blocks include the x first pad blocks and the y second pad blocks, the n pad blocks further include z third pad blocks, and z is a positive integer; and
the y second pad blocks are located after the x first pad blocks and before the z third pad blocks, and the x first pad blocks, the y second pad blocks, and the z third pad blocks are consecutive; or
the z third pad blocks are located after the x first pad blocks and before the y second pad blocks, and the x first pad blocks, the z third pad blocks, and the y second pad blocks are consecutive.

Optionally, in the third aspect and the fourth aspect, the third pad block is a data block.

Optionally, in the third aspect and the fourth aspect, the third pad block includes at least one block identifier.

Optionally, in the third aspect and the fourth aspect, the third pad block further includes at least one check identifier, and the at least one check identifier is used to check correctness of the at least one block identifier.

Optionally, in the third aspect and the fourth aspect, in the third pad block, a quantity of the at least one block identifier is equal to a quantity of the at least one check identifier; or a sum of the quantity of the at least one block identifier and the quantity of the at least one check identifier is an odd number.

Optionally, in the third aspect and the fourth aspect, the n pad blocks include the x first pad blocks, the first pad block is a control block that is globally unique in the first data stream, and x is a positive integer. Searching the first data stream for the pad block, to find the pad sequence includes: searching the first data stream for the first pad block; and searching the first data stream for the pad sequence based on the first pad block found in the first data stream.

Optionally, in the third aspect and the fourth aspect, searching the first data stream for the pad sequence based on the first pad block found in the first data stream includes: determining n-1 blocks after the 1^{st} first pad block found in the first data stream, where the n-1 blocks are consecutive, and the n-1 blocks are consecutive to the 1^{st} first pad block; and detecting the n-1 blocks, to find a pad block in the n-1 blocks. Optionally, the plurality of pad blocks consecutively found in the first data stream include the 1^{st} first pad block found in the first data stream and the pad block found in the n-1 blocks after the 1^{st} first pad block.

According to the technical solution provided in this application, after finding the 1^{st} first pad block in the first data stream, the FlexE shim at the receiving end searches the n-1 blocks after the 1^{st} first pad block for a pad block. This can avoid a case in which a length of a data segment between the 1^{st} pad block and the last pad block in the plurality of pad blocks that are consecutively found by the FlexE shim at the receiving end in the first data stream is greater than n, that is, avoid a case in which the plurality of pad blocks that are consecutively found by the FlexE shim at the receiving end are pad blocks in different pad sequences.

Optionally, detecting the n-1 blocks, to find the pad block in the n-1 blocks includes: mapping the 1^{st} first pad block and the n-1 blocks to a block bitmap; and detecting the n-1 blocks based on the block bitmap, to find the pad block in the n-1 blocks.

According to the technical solution provided in this application, in each process of searching for the pad sequence, the FlexE shim at the receiving end maps, to the block bitmap, the 1^{st} first pad block found in the first data stream and the n-1 blocks after the 1^{st} first pad block, to find the pad block based on the block bitmap. This can avoid a case in which the plurality of pad blocks that are consecutively found by the FlexE shim at the receiving end are pad blocks in different pad sequences.

Optionally, the n pad blocks include a third pad block, and the third pad block includes at least one block identifier. Mapping the 1^{st} first pad block and the n-1 blocks to the block bitmap includes: mapping the third pad block to the block bitmap based on the block identifier in the third pad block.

In the technical solution provided in this application, because the third pad block includes the block identifier, the FlexE shim at the receiving end may conveniently map the third pad block to the block bitmap based on the block identifier in the third pad block.

Optionally, the third pad block further includes at least one check identifier, and mapping the third pad block to the block bitmap based on the block identifier in the third pad block includes: checking correctness of the at least one block identifier based on the at least one check identifier; and mapping the third pad block to the block bitmap based on a correct block identifier in the at least one block identifier.

In the technical solution provided in this application, because the third pad block includes the check identifier, the FlexE shim at the receiving end may check correctness of the block identifier in the third pad block based on the check identifier in the third pad block, so that the FlexE shim at the receiving end does not map the third pad block to the block bitmap based on an incorrect block identifier. This improves accuracy of mapping the third pad block by the FlexE shim at the receiving end.

According to a fifth aspect, a data processing apparatus is provided, and is applied to FlexE. The data processing apparatus includes at least one functional unit, and the at least one functional unit is configured to perform the method provided in any one of the first aspect or the optional manners of the first aspect. The at least one functional unit may be implemented based on software, hardware, or a combination of software and hardware, and the at least one functional unit may be combined or divided based on specific implementation.

Optionally, the data processing apparatus includes a transceiver unit and a processing unit. The transceiver unit is configured to perform a receiving and sending operation in the method provided in any one of the first aspect or the optional manners of the first aspect. The processing unit is configured to perform an operation other than the receiving and sending operation in the method provided in any one of the first aspect or the optional manners of the first aspect.

Optionally, the transceiver unit is configured to receive an initial data stream sent by a FlexE instance.

The processing unit is configured to periodically insert a pad sequence into the initial data stream, to obtain a first data stream, where the first data stream includes the pad sequence that periodically appears, the pad sequence includes n consecutive pad blocks, and n is an integer greater than or equal to 4.

According to a sixth aspect, a data processing apparatus is provided, and is applied to FlexE. The data processing apparatus includes at least one functional unit, and the at least one functional unit is configured to perform the method provided in any one of the second aspect or the optional manners of the second aspect. The at least one functional unit may be implemented based on software, hardware, or a combination of software and hardware, and the at least one functional unit may be combined or divided based on specific implementation.

Optionally, the data processing apparatus includes a transceiver unit and a processing unit. The transceiver unit is configured to perform a receiving and sending operation in the method provided in any one of the second aspect or the optional manners of the second aspect. The processing unit is configured to perform an operation other than the receiving and sending operation in the method provided in any one of the second aspect or the optional manners of the second aspect.

Optionally, the transceiver unit is configured to receive an initial data stream, where the initial data stream is obtained by interleaving a plurality of data streams sent by a plurality of FlexE instances.

The processing unit is configured to periodically insert a pad sequence into the initial data stream, to obtain a first data stream, where the first data stream includes the pad sequence that periodically appears, the pad sequence includes n consecutive pad blocks, and n is an integer greater than or equal to 16.

Optionally, in the fifth aspect and the sixth aspect, the n pad blocks include x first pad blocks and y second pad blocks, the first pad block is a control block that is globally unique in the first data stream, the second pad block is an error error block, x is a positive integer, and y is a positive integer.

Optionally, in the fifth aspect and the sixth aspect, the x first pad blocks and the y second pad blocks satisfy any one of the following:
x=1, y=n-1, the y second pad blocks are located after the first pad block, and the y second pad blocks are consecutive to the first pad block;
n is an even number, x=y=n/2, the y second pad blocks are located after the x first pad blocks, and the y second pad blocks are consecutive to the x first pad blocks;
n is an even number, x=y=n/2, the pad sequence includes n/2 block groups, each block group includes one first pad block and one second pad block, the second pad block is located after the first pad block and is consecutive to the first pad block in each block group, and pad blocks in the n/2 block groups are consecutive; or
the x first pad blocks include x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x1 and x2 are both positive integers.

Optionally, in the fifth aspect and the sixth aspect, the n pad blocks further include z third pad blocks, and z is a positive integer; and
the y second pad blocks are located after the x first pad blocks and before the z third pad blocks, and the x first pad blocks, the y second pad blocks, and the z third pad blocks are consecutive; or
the z third pad blocks are located after the x first pad blocks and before the y second pad blocks, and the x first pad blocks, the z third pad blocks, and the y second pad blocks are consecutive.

Optionally, in the fifth aspect and the sixth aspect, the third pad block is a data block.

Optionally, in the fifth aspect and the sixth aspect, the third pad block includes at least one block identifier.

Optionally, in the fifth aspect and the sixth aspect, the third pad block further includes at least one check identifier, and the at least one check identifier is used to check correctness of the at least one block identifier.

Optionally, in the fifth aspect and the sixth aspect, a quantity of the at least one block identifier is equal to a quantity of the at least one check identifier; or a sum of the quantity of the at least one block identifier and the quantity of the at least one check identifier is an odd number.

According to a seventh aspect, a data processing apparatus is provided, and is applied to FlexE. The data processing apparatus includes at least one functional unit, and the at least one functional unit is configured to perform the method provided in any one of the third aspect or the optional manners of the third aspect. The at least one functional unit may be implemented based on software, hardware, or a combination of software and hardware, and the at least one functional unit may be combined or divided based on specific implementation.

Optionally, the data processing apparatus includes a transceiver unit and a processing unit. The transceiver unit is configured to perform a receiving and sending operation in the method provided in any one of the third aspect or the optional manners of the third aspect. The processing unit is configured to perform an operation other than the receiving and sending operation in the method provided in any one of the third aspect or the optional manners of the third aspect.

Optionally, the transceiver unit is configured to obtain a first data stream, where the first data stream is one of a plurality of data streams obtained by de-interleaving, the first data stream includes a pad sequence that periodically appears, the pad sequence includes n consecutive pad blocks, and n is an integer greater than or equal to 4; and
the processing unit is configured to: search the first data stream for a pad block, to find the pad sequence; and when a plurality of pad blocks consecutively found in the first data stream satisfy a preset condition, determine that the pad sequence is found, where the preset condition includes: a quantity of the plurality of pad blocks is greater than a preset threshold, and the quantity of the plurality of pad blocks is less than or equal to n.

According to an eighth aspect, a data processing apparatus is provided, and is applied to FlexE. The data processing apparatus includes at least one functional unit, and the at least one functional unit is configured to perform the method provided in any one of the fourth aspect or the optional manners of the fourth aspect. The at least one functional unit may be implemented based on software, hardware, or a combination of software and hardware, and the at least one functional unit may be combined or divided based on specific implementation.

Optionally, the data processing apparatus includes a transceiver unit and a processing unit. The transceiver unit is configured to perform a receiving and sending operation in the method provided in any one of the third aspect or the optional manners of the third aspect. The processing unit is configured to perform an operation other than the receiving and sending operation in the method provided in any one of the fourth aspect or the optional manners of the fourth aspect.

Optionally, the transceiver unit is configured to obtain a first data stream, where the first data stream is obtained by periodically inserting a pad sequence into an initial data stream, the initial data stream is obtained by interleaving a plurality of data streams sent by a plurality of FlexE instances, the first data stream includes the pad sequence that periodically appears, the pad sequence includes n consecutive pad blocks, and n is an integer greater than or equal to 16; and
the processing unit is configured to: search the first data stream for a pad block, to find the pad sequence; and when a plurality of pad blocks consecutively found in the first data stream satisfy a preset condition, determine that the pad sequence is found, where the preset condition includes: a quantity of the plurality of pad blocks is greater than a preset threshold, and the quantity of the plurality of pad blocks is less than or equal to n.

Optionally, in the seventh aspect and the eighth aspect, the n pad blocks include x first pad blocks and y second pad blocks, the first pad block is a control block that is globally unique in the first data stream, the second pad block is an error error block, x is a positive integer, and y is a positive integer.

Optionally, in the seventh aspect and the eighth aspect, the x first pad blocks and the y second pad blocks satisfy any one of the following:
x=1, y=n-1, the y second pad blocks are located after the first pad block, and the y second pad blocks are consecutive to the first pad block;
n is an even number, x=y=n/2, the y second pad blocks are located after the x first pad blocks, and the y second pad blocks are consecutive to the x first pad blocks;
n is an even number, x=y=n/2, the pad sequence includes n/2 block groups, each block group includes one first pad block and one second pad block, the second pad block is located after the first pad block and is consecutive to the first pad block in each block group, and pad blocks in the n/2 block groups are consecutive; or
the x first pad blocks include x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x1 and x2 are both positive integers.

Optionally, in the seventh aspect and the eighth aspect, the n pad blocks further include z third pad blocks, and z is a positive integer; and
the y second pad blocks are located after the x first pad blocks and before the z third pad blocks, and the x first pad blocks, the y second pad blocks, and the z third pad blocks are consecutive; or
the z third pad blocks are located after the x first pad blocks and before the y second pad blocks, and the x first pad blocks, the z third pad blocks, and the y second pad blocks are consecutive.

Optionally, in the seventh aspect and the eighth aspect, the third pad block is a data block.

Optionally, in the seventh aspect and the eighth aspect, the third pad block includes at least one block identifier.

Optionally, in the seventh aspect and the eighth aspect, the third pad block further includes at least one check identifier, and the at least one check identifier is used to check correctness of the at least one block identifier.

Optionally, in the seventh aspect and the eighth aspect, a quantity of the at least one block identifier is equal to a quantity of the at least one check identifier; or a sum of the quantity of the at least one block identifier and the quantity of the at least one check identifier is an odd number.

Optionally, in the seventh aspect and the eighth aspect, the n pad blocks include the x first pad blocks, the first pad block is a control block that is globally unique in the first data stream, and x is a positive integer. The processing module is configured to: search the first data stream for the first pad block; and search the first data stream for the pad sequence based on the first pad block found in the first data stream.

Optionally, in the seventh aspect and the eighth aspect, the processing module is configured to: determine n-1 blocks that are located after the 1^{st} first pad block found in the first data stream, where the n-1 blocks are consecutive, and the n-1 blocks are consecutive to the 1^{st} first pad block; and detect the n-1 blocks, to find a pad block in the n-1 blocks.

Optionally, in the seventh aspect and the eighth aspect, the processing module is configured to: map the 1^{st} first pad block and the n-1 blocks to a block bitmap; and detect the n-1 blocks based on the block bitmap, to find the pad block in the n-1 blocks.

Optionally, in the seventh aspect and the eighth aspect, the n pad blocks include a third pad block, the third pad block includes at least one block identifier, and the processing module is configured to map the third pad block to the block bitmap based on the block identifier in the third pad block.

Optionally, in the seventh aspect and the eighth aspect, the third pad block further includes at least one check identifier, and the processing module is configured to: check correctness of the at least one block identifier based on the at least one check identifier; and map the third pad block to the block bitmap based on a correct block identifier in the at least one block identifier.

According to a ninth aspect, a data processing apparatus is provided, including a memory and a processor. The memory is configured to store a computer program. The processor is configured to execute the computer program stored in the memory, so that the data processing apparatus performs the method provided in any one of the first aspect or the optional manners of the first aspect, or performs the method provided in any one of the second aspect or the optional manners of the second aspect, or performs the method provided in any one of the third aspect or the optional manners of the third aspect, or performs the method provided in any one of the fourth aspect or the optional manners of the fourth aspect.

According to a tenth aspect, a communication system is provided. The communication system includes a transmitting end and a receiving end. The transmitting end includes the data processing apparatus provided in any one of the fifth aspect, the optional manners of the fifth aspect, the sixth aspect, the optional manners of the sixth aspect, or the ninth aspect. The receiving end includes the data processing apparatus provided in any one of the seventh aspect, the optional manners of the seventh aspect, the eighth aspect, the optional manners of the eighth aspect, or the ninth aspect.

According to an eleventh aspect, a computer-readable storage medium is provided. The computer-readable storage medium stores a computer program, and when the computer program is executed, the method provided in any one of the first aspect or the optional manners of the first aspect is implemented, the method provided in any one of the second aspect or the optional manners of the second aspect is implemented, or the method provided in any one of the third aspect or the optional manners of the third aspect is implemented, or the method provided in any one of the fourth aspect or the optional manners of the fourth aspect is implemented.

According to a twelfth aspect, a computer program product is provided. The computer program product includes a program or code. When the program or the code is executed, the method provided in any one of the first aspect or the optional manners of the first aspect is implemented, the method provided in any one of the second aspect or the optional manners of the second aspect is implemented, or the method provided in any one of the third aspect or the optional manners of the third aspect is implemented, or the method provided in any one of the fourth aspect or the optional manners of the fourth aspect is implemented.

According to a thirteenth aspect, a chip is provided. The chip includes a programmable logic circuit and/or program instructions, and when running, the chip is configured to implement the method provided in any one of the first aspect or the optional manners of the first aspect, or implement the method provided in any one of the second aspect or the optional manners of the second aspect, or implement the method provided in any one of the third aspect or the optional manners of the third aspect, or implement the method provided in any one of the fourth aspect or the optional manners of the fourth aspect.

Optionally, the chip is a FlexE shim.

For technical effects of the second aspect to the thirteenth aspect, refer to technical effects of the first aspect. Details are not described herein again.

### BRIEF DESCRIPTION OF DRAWINGS

FIG. 1 is a diagram of an architecture of a FlexE protocol according to an embodiment of this application;
FIG. 2 is a diagram of a switch according to an embodiment of this application;
FIG. 3 is a diagram of a bandwidth of a FlexE port according to an embodiment of this application;
FIG. 4 is a diagram of a data stream including a pad block according to an embodiment of this application;
FIG. 5 is a diagram of a P1 block according to an embodiment of this application;
FIG. 6 is a diagram of a P2 block according to an embodiment of this application;
FIG. 7 is a diagram of an application scenario according to an embodiment of this application;
FIG. 8 is a diagram of another application scenario according to an embodiment of this application;
FIG. 9 is a diagram of still another application scenario according to an embodiment of this application;
FIG. 10 is a flowchart of a data processing method according to an embodiment of this application;
FIG. 11 is a diagram of a third pad block according to an embodiment of this application;
FIG. 12 is a diagram of another third pad block according to an embodiment of this application;
FIG. 13 is a diagram of still another third pad block according to an embodiment of this application;
FIG. 14 is a diagram of yet another third pad block according to an embodiment of this application;
FIG. 15 is a diagram of a first data stream according to an embodiment of this application;
FIG. 16 is a diagram of another first data stream according to an embodiment of this application;
FIG. 17 is a diagram of still another first data stream according to an embodiment of this application;
FIG. 18 is a diagram of yet another first data stream according to an embodiment of this application;
FIG. 19 is a diagram of yet another first data stream according to an embodiment of this application;
FIG. 20 is a diagram of yet another first data stream according to an embodiment of this application;
FIG. 21 is a diagram of yet another first data stream according to an embodiment of this application;
FIG. 22 is a flowchart of another data processing method according to an embodiment of this application;
FIG. 23 is a diagram of a block bitmap according to an embodiment of this application;
FIG. 24 is a flowchart of still another data processing method according to an embodiment of this application;
FIG. 25 is a flowchart of yet another data processing method according to an embodiment of this application;
FIG. 26 is a diagram of a data processing apparatus according to an embodiment of this application;
FIG. 27 is a diagram of another data processing apparatus according to an embodiment of this application;
FIG. 28 is a diagram of still another data processing apparatus according to an embodiment of this application; and
FIG. 29 is a diagram of yet another data processing apparatus according to an embodiment of this application.

### DESCRIPTION OF EMBODIMENTS

The following further describes in detail implementations of this application with reference to accompanying drawings.

In the communication field, in the Ethernet (Ethernet) technology, to implement functions such as multi-channel alignment and block delimitation at a physical layer (physical layer, PHY), an alignment marker (alignment marker, AM) is inserted. Specifically, a PHY interface at a transmitting end periodically inserts an AM block into a data stream and sends the data stream including the AM block. After receiving the data stream including the AM block, a PHY interface at a receiving end finds and deletes the AM block in the data stream, and then sends a remaining block to an upper layer for processing. Specifically, the PHY includes a physical coding sublayer (physical coding sublayer, PCS). A PCS at the transmitting end inserts the AM block, and a PCS at the receiving end finds and deletes the AM block. Generally, PHY interfaces of different rates insert AM blocks into data streams at different ratios. For example, according to a current standard, an AM insertion ratio of a 100GE PHY interface is 1/16384, AM insertion ratios of a 50GE PHY interface, a 200GE PHY interface, a 400GE PHY interface, and an 800GE PHY interface are all 1/20480, and an AM insertion ratio of a 1.6TE PHY interface is 1/81920.

The flexible Ethernet (flexible Ethernet, FlexE) protocol is a standard protocol defined by the Optical Internetworking Forum (Optical Internetworking Forum, OIF) standardization organization. The FlexE protocol introduces a concept of a FlexE port, and the FlexE port is also referred to as a physical interface group, a physical link group, a PHY group (PHY group), a FlexE group (FlexE group), or the like. One FlexE port includes several 50GE PHY interfaces, 100GE PHY interfaces, 200GE PHY interfaces, and/or 400GE PHY interfaces, and may also include PHY interfaces of higher rates such as 800GE PHY interfaces and 1.6TE PHY interfaces in the future. One FlexE port supports one or more FlexE instances. Each FlexE instance introduces a fixed periodic frame structure and performs slot division based on a time division multiplexing (time-division multiplexing, TDM) mechanism. One or more slots support one Ethernet data stream or carry one flexible Ethernet client (flexible Ethernet client, FlexE client) data stream. That is, one Ethernet data stream corresponds to one or more slots, or one FlexE client data stream is carried in one or more slots, and different FlexE client data streams are carried in different slots. For example, for a 100 gigabits per second (giga bits per second, Gbps) FlexE instance, a periodic frame structure of the FlexE instance includes 20 slots, a bandwidth of each slot is 5 Gbps, each slot has 1023×8=8184 66-bit transmission windows, and a bandwidth of each 66-bit transmission window is 5 Gbps/8184=0.61 million bits per second (million bits per second, Mbps).

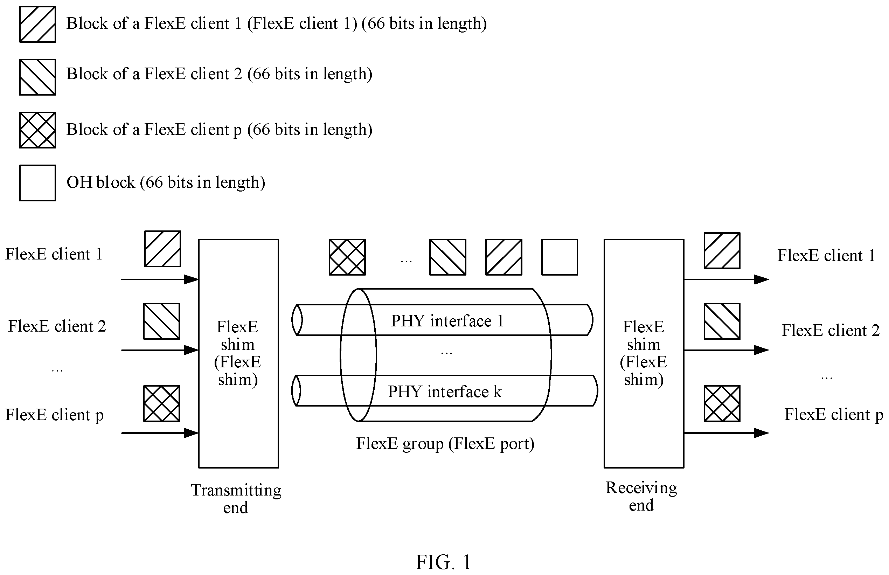

The FlexE protocol implements rate decoupling between a media access control (medium access control, MAC) layer and a physical layer (physical layer, PHY) by introducing a FlexE shim (FlexE shim). That is, rates at the MAC layer do not need to be in one-to-one correspondence with rates at the PHY. For example, FIG. 1 is a diagram of an architecture of the FlexE protocol. As shown in FIG. 1, the FlexE protocol defines a FlexE client, a FlexE shim, and a FlexE group (namely, a FlexE group and a FlexE port). The FlexE client is a MAC layer service, the MAC layer service uses a 64B/66B-encoded data stream, the data stream includes a plurality of blocks in a length of 66 bits, a rate of the MAC layer service is 10 Gbps, 40 Gbps, or m*25 Gbps, and m is a positive integer. The FlexE group includes several PHY interfaces to provide a higher bandwidth. The FlexE shim is configured to multiplex and demultiplex data streams based on a TDM technology. For example, a FlexE shim at a transmitting end is configured to multiplex a data stream based on the TDM technology, and a FlexE shim at a receiving end is configured to demultiplex a data stream based on the TDM technology. For example, FIG. 1 shows p FlexE clients, and shows that the FlexE group includes k PHY interfaces. Both p and k are positive integers. Each FlexE client represents a 64B/66B-encoded data stream at the MAC layer. Rates of the p FlexE clients may be equal or unequal. As shown in FIG. 1, the FlexE shim at the transmitting end is configured to map blocks of the p FlexE clients to the FlexE group in a TDM manner for transmission, and the FlexE shim at the transmitting end is configured to insert, at a fixed interval, a 64B/66B-encoded overhead (overhead, OH) block into a block stream (namely, a data stream) in which the blocks of the p FlexE clients are mixed. The OH block is used by the receiving end to perform block delimitation and demultiplexing. The FlexE shim at the receiving end is configured to: after obtaining the block stream in which the blocks of the p FlexE clients are mixed and into which the OH block is inserted, first lock and parse the OH block, to obtain the blocks of the FlexE clients by demultiplexing based on the OH block.

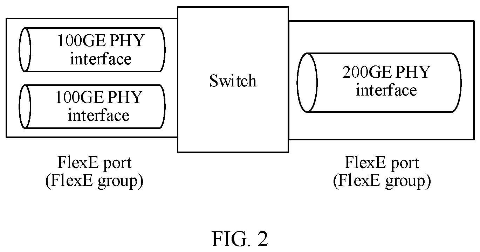

A current FlexE port may include a plurality of 50GE PHY interfaces, or may include a plurality of 100GE PHY interfaces, a plurality of 200GE PHY interfaces, or a plurality of 400GE PHY interfaces. In the future, a FlexE port may also include 800GE PHY interfaces, 1.6TE PHY interfaces, or even PHY interfaces of a higher rate. FlexE ports including PHY interfaces of different rates need to be interconnected. To implement interworking between the FlexE ports including the PHY interfaces of the different rates, available bandwidths of the different FlexE ports including the PHY interfaces of the different rates need to be equal. For example, as shown in FIG. 2, for a switch that supports a FlexE function, an uplink FlexE port of the switch includes two 100GE PHY interfaces, a downlink FlexE port of the switch includes one 200GE PHY interface, and the uplink FlexE port and the downlink FlexE port are interconnected through FlexE cross-connect. To implement interworking between the uplink FlexE port and the downlink FlexE port, an available bandwidth of the uplink FlexE port needs to be equal to an available bandwidth of the downlink FlexE port. Actually, although PHY interfaces of different rates (for example, 50GE, 100GE, 200GE, 400GE, 800GE, and 1.6TE) present an integer multiple relationship in nominal bandwidths, available bandwidths provided by the PHY interfaces for a FlexE port are different. Specifically, an available bandwidth provided by a PHY interface for the FlexE port is a bandwidth obtained by deducting AM overheads from a bandwidth of the PHY interface, and an available bandwidth of the FlexE port is a sum of available bandwidths provided by PHY interfaces in the FlexE port for the FlexE port. Because AM insertion ratios of PHY interfaces of different rates are different, the PHY interfaces of different rates provide different available bandwidths for the FlexE port. To enable interworking between FlexE ports including PHY interfaces of different rates, that is, to ensure that available bandwidths of different FlexE ports including PHY interfaces of different rates are equal, a pad block needs to be inserted into a data stream sent by a FlexE port with a higher available bandwidth for padding, to reduce an available bandwidth of the FlexE port. For example, a pad block needs to be inserted into a data stream sent by the downlink FlexE port of the switch shown in FIG. 2 for padding.

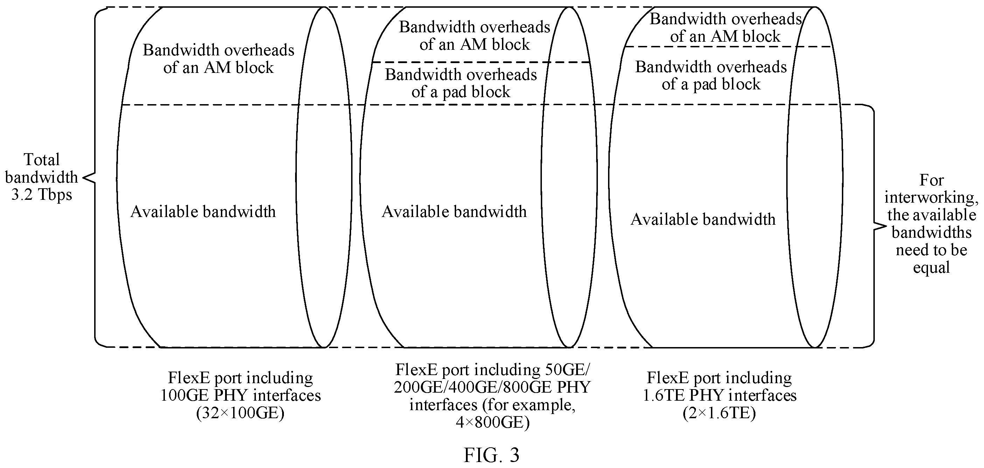

For example, 64 50GE PHY interfaces, 32 100GE PHY interfaces, 16 200GE PHY interfaces, 8 400GE PHY interfaces, 4 800GE PHY interfaces, or 2 1.6TE PHY interfaces may form a FlexE port with a total bandwidth of 3.2 terabits per second (terabit per second, Tbps). However, an AM insertion ratio of a 100GE PHY interface is 1/16384, AM insertion ratios of a 50GE PHY interface, a 200GE PHY interface, a 400GE PHY interface, and an 800GE PHY interface are all 1/20480, and an AM insertion ratio of a 1.6TE PHY interface is 1/81920. Therefore, an available bandwidth of a FlexE port including 32 100GE PHY interfaces, an available bandwidth of a FlexE port including 64 50GE PHY interfaces, 16 200GE PHY interfaces, 8 400GE PHY interfaces, or 4 800GE PHY interfaces, and an available bandwidth of a FlexE port including 2 1.6TE PHY interfaces are different. To enable the available bandwidth of the FlexE port including 32 100GE PHY interfaces, the available bandwidth of the FlexE port including 64 50GE PHY interfaces, 16 200GE PHY interfaces, 8 400GE PHY interfaces, or 4 800GE PHY interfaces, and the available bandwidth of the FlexE port including 2 1.6TE PHY interfaces to be equal, a pad block needs to be inserted into a data stream sent by the FlexE port including 64 50GE PHY interfaces, 16 200GE PHY interfaces, 8 400GE PHY interfaces, or 4 800GE PHY interfaces, and a pad block needs to be inserted into a data stream sent by the FlexE port including 2 1.6TE PHY interfaces. In addition, an insertion ratio of pad blocks in the data stream sent by the FlexE port including 2 1.6TE PHY interfaces is higher than an insertion ratio of pad blocks in the data stream sent by the FlexE port including 64 50GE PHY interfaces, 16 200GE PHY interfaces, 8 400GE PHY interfaces, or 4 800GE PHY interfaces. For example, as shown in FIG. 3, the 32 100GE PHY interfaces, the 4 800GE PHY interfaces, or the 2 1.6TE PHY interfaces may form a FlexE port with a total bandwidth of 3.2 Tbps. However, an AM insertion ratio of the 100GE PHY interface is higher than an AM insertion ratio of the 800GE PHY interface, and the AM insertion ratio of the 800GE PHY interface is higher than an AM insertion ratio of the 1.6TE PHY interface. Therefore, pad blocks are separately inserted into a data stream sent by the FlexE port including the 4 800GE PHY interfaces and a data stream sent by the FlexE port including the 2 1.6TE PHY interfaces for padding, and an insertion ratio of pad blocks in the data stream sent by the FlexE port including the 2 1.6TE PHY interfaces is higher than an insertion ratio of pad blocks in the data stream sent by the FlexE port including the 4 800GE PHY interfaces. In this manner, the available bandwidth of the FlexE port including the 2 1.6TE PHY interfaces and the available bandwidth of the FlexE port including the 4 800GE PHY interfaces are decreased, and the available bandwidth of the FlexE port including the 32 100GE PHY interfaces, the available bandwidth of the FlexE port including the 4 800GE PHY interfaces, and the available bandwidth of the FlexE port including the 2 1.6TE PHY interfaces are equal. Therefore, interworking between the FlexE port including the 32 100GE PHY interfaces, the FlexE port including the 4 800GE PHY interfaces, and the FlexE port including the 2 1.6TE PHY interfaces is implemented.

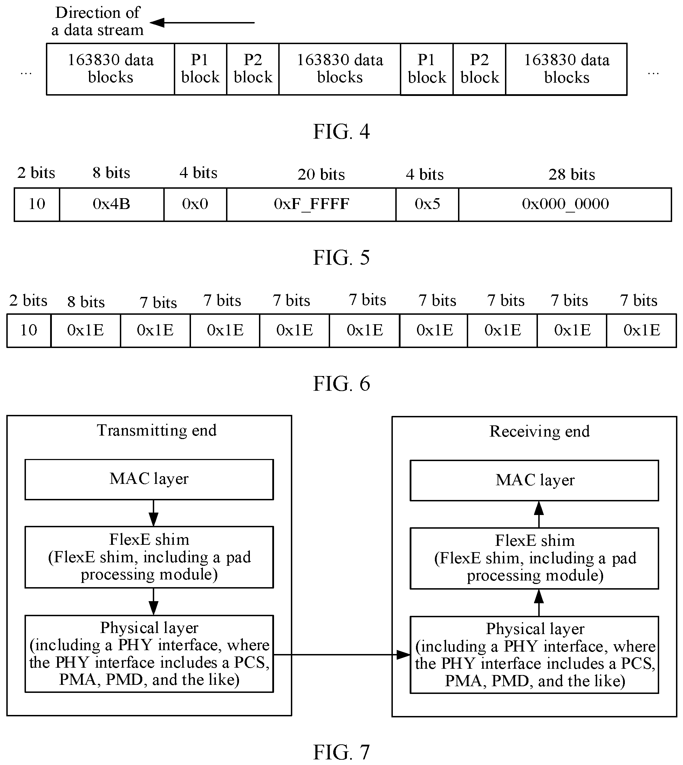

In a pad block insertion method and a pad block detection method defined in a current FlexE standard, specifically, the FlexE 2.2 implementation protocol (FlexE 2.2 implementation agreement), a FlexE shim at a transmitting end inserts two pad blocks into a data stream after every 163830 blocks, and sends a data stream including the pad blocks. After a FlexE shim at a receiving end receives the data stream including the pad blocks, the FlexE shim at the receiving end detects pad blocks in the data stream, to find the two pad blocks. When the two pad blocks are both correctly detected, the FlexE shim at the receiving end determines that the detection succeeds. That is, the FlexE shim at the receiving end finds the two pad blocks. Further, the FlexE shim at the receiving end deletes the pad blocks in the data stream, and then sends a remaining block to an upper layer for processing. For example, FIG. 4 shows a data stream obtained by inserting pad blocks by using the pad block insertion method defined in the current FlexE standard. There are two pad blocks after every 163830 blocks (the 163830 blocks are referred to as data blocks in FIG. 4 for ease of differentiation) in the data stream. The two pad blocks are respectively a P1 block and a P2 block. A length of the P1 block and a length of the P2 block are both 66 bits. The P1 block is a control block that is globally unique in the data stream, and the P2 block is an error (error) block. After the FlexE shim at the receiving end receives the data stream including the P1 block and the P2 block, the FlexE shim at the receiving end first locks the globally unique P1 block by detection, and then detects whether a block immediately following the locked P1 block is a P2 block. If the FlexE shim at the receiving end determines, by detection, that a block immediately following the P1 block is a P2 block, the FlexE shim at the receiving end considers that the P1 block and the P2 block are both successfully detected, and the FlexE shim at the receiving end deletes the P1 block and the P2 block in the data stream, and then sends a remaining block to an upper layer for processing. If the FlexE shim at the receiving end determines, by detection, that a block immediately following the P1 block is not a P2 block, the FlexE shim at the receiving end considers that detection of the P2 block fails, and the FlexE shim at the receiving end re-detects and locks a P1 block backward from a current detection position, and detects whether a block immediately following the locked P1 block is a P2 block until detection succeeds.

In an example, FIG. 5 is a diagram of a P1 block. A length of the P1 block is 66 bits. The 1^{st} and 2^{nd} bits in the P1 block indicate a type of the P1 block, and a value "10" of the 1^{st} and 2^{nd} bits indicates that the P1 block is a control block. A value "0x4B" of the 3^{rd} to 10^{th} bits in the P1 block indicates that the 11^{th} to 34^{th} bits in the P1 block are data information. The 35^{th} to 38^{th} bits in the P1 block are a separation field, and are used to separate the data information of the 11^{th} to 34^{th} bits and control information of the 39^{th} to 66^{th} bits. A value "0x5" of the 35^{th} to 38^{th} bits is an internationally universal value. When the value of the 35^{th} to 38^{th} bits is "0x5", a value "0x0" in the FlexE standard is reused for the 11^{th} to 14^{th} bits, and a value "0xF_FFFF" in the FlexE standard is reused for the 15^{th} to 34^{th} bits.

In an example, FIG. 6 is a diagram of a P2 block. A length of the P2 block is 66 bits. The 1^{st} and 2^{nd} bits in the P2 block indicate a type of the P2 block, and a value "10" of the 1^{st} and 2^{nd} bits indicates that the P2 block is a control block. The 3^{rd} to 10^{th} bits in the P1 block indicate a specific type of the control block, and a value "0x1E" of the 3^{rd} to 10^{th} bits indicates that the P2 block is specifically an error block. In the P2 block, a value of the 11^{th} to 17^{th} bits, a value of the 18^{th} to 24^{th} bits, a value of the 25^{th} to 31^{st} bits, a value of the 32^{nd} to 38^{th} bits, a value of the 39^{th} to 45^{th} bits, a value of the 46^{th} to 52^{nd} bits, a value of the 53^{rd} to 59^{th} bits, and a value of the 60^{th} to 66^{th} bits are all "0x1E".

It should be noted that, the foregoing describes bits in the P1 block and bits in the P2 block in an order from a most significant bit to a least significant bit. The bits in the P1 block and the bits in the P2 block may alternatively be described in an order from a least significant bit to a most significant bit. Regardless of an order in which the bits in the P1 block and the bits in the P2 block are described, a meaning of each field in the P1 block and a meaning of each field in the P2 block are not affected. In addition, this specification describes only the P1 block and the P2 block as an example. For specific descriptions of the P1 block and the P2 block, refer to a related standard document.

The pad block insertion method defined in the current FlexE standard is mainly oriented to a 50GE PHY interface, a 200GE PHY interface, and a 400GE PHY interface. With evolution of an Ethernet standard, a rate of a PHY interface continuously increases to 800GE, 1.6TE, and the like. The pad block insertion method defined in the current FlexE standard is difficult to apply to a PHY interface of a higher rate such as an 800GE PHY interface or a 1.6TE PHY interface. For example, according to the current FlexE standard, a quantity of pad blocks that need to be inserted in one pad periodicity (for example, 163830 blocks) is 2. With evolution of an Ethernet standard, a FlexE port may include an 800GE PHY interface or a 1.6TE PHY interface, and a quantity of pad blocks that need to be inserted in one pad periodicity may evolve to 4, 8, 16, or even more. Therefore, a new insertion method needs to be provided to adapt to evolution of the Ethernet standard.

In addition, in the pad block detection method defined in the current FlexE standard, the FlexE shim at the receiving end determines that detection succeeds only when all pad blocks inserted in a pad periodicity are correctly detected (detection succeeds only when the FlexE shim at the receiving end finds the P1 block and the P2 block that are consecutive). Consequently, a fault tolerance capability of the detection method is poor. Specifically, at a same probability of bit errors, that is, at a same bit error rate (bit error rate, BER), as a quantity of pad blocks inserted in a pad periodicity increases, a probability that joint detection on a plurality of pad blocks fails increases. Consequently, a fault tolerance capability of the detection method is poor. For example, according to the pad block detection method defined in the current FlexE standard, when BER=1×10⁻¹³, if the FlexE shim at the transmitting end inserts two pad blocks in one pad periodicity, the FlexE shim at the receiving end needs to perform joint detection of pad blocks on two blocks, and a probability that joint detection on two blocks fails is approximately 1.3×10⁻¹¹ (a total length of the two blocks is 66×2=132 bits, and when an error occurs in any bit in the 132 bits, it is considered that the detection fails; and therefore, a probability that detection fails is 132×1×10⁻¹³, which is approximately equal to 1.3×10⁻¹¹). If the FlexE shim at the transmitting end inserts eight pad blocks in one pad periodicity, the FlexE shim at the receiving end needs to perform joint detection of pad blocks on eight blocks, and a probability that joint detection on eight blocks fails is approximately 5.3×10⁻¹¹. If the FlexE shim at the transmitting end inserts 16 pad blocks in one pad periodicity, the FlexE shim at the receiving end needs to perform joint detection of pad blocks on 16 blocks, and a probability that joint detection on 16 blocks fails is approximately 1×10⁻¹⁰. If the FlexE shim at the transmitting end inserts 32 pad blocks in one pad periodicity, the FlexE shim at the receiving end needs to perform joint detection of pad blocks on 32 blocks, and a probability that joint detection on 32 blocks fails is approximately 2.1×10⁻¹⁰. If the FlexE shim at the transmitting end inserts 64 pad blocks in one pad periodicity, the FlexE shim at the receiving end needs to perform joint detection of pad blocks on 64 blocks, and a probability that joint detection on 64 blocks fails is approximately 4.2×10⁻¹⁰. If the FlexE shim at the transmitting end inserts 128 pad blocks in one pad periodicity, the FlexE shim at the receiving end needs to perform joint detection of pad blocks on 128 blocks, and a probability that detection on 128 blocks fails is approximately 8.5×10⁻¹⁰. If the FlexE shim at the transmitting end inserts 256 pad blocks in one pad periodicity, the FlexE shim at the receiving end needs to perform joint detection of pad blocks on 256 blocks, and a probability that joint detection on 256 blocks fails is approximately 1.7×10⁻⁹. It can be learned that, as a quantity of pad blocks inserted in one pad periodicity increases, a probability that joint detection on a plurality of blocks fails increases exponentially. This easily affects normal operation of FlexE.

Embodiments of this application provide a data processing method and apparatus, and relate to pad block insertion and detection (or searching and identification). In the data processing method provided in embodiments of this application, a FlexE shim at a transmitting end (specifically, a pad processing module in the FlexE shim at the transmitting end) periodically inserts a pad sequence into an initial data stream, to obtain a first data stream. The pad sequence includes n consecutive pad blocks. After obtaining the first data stream, a FlexE shim at a receiving end (specifically, a pad processing module in the FlexE shim at the receiving end) searches the first data stream for a pad block, to find the pad sequence. When a quantity of a plurality of pad blocks consecutively found in the first data stream is greater than a preset threshold and is less than or equal to n, the FlexE shim at the receiving end determines that the pad sequence is found, that is, determines that pad sequence detection succeeds (or pad detection succeeds), where n is an integer greater than or equal to 4, or n is an integer greater than or equal to 16. For example, when the initial data stream is a data stream of one FlexE instance in the FlexE shim at the transmitting end, n is an integer greater than or equal to 4. When the initial data stream is a data stream obtained by performing interleaving (interleave) on a plurality of data streams of a plurality of FlexE instances in the FlexE shim at the transmitting end, n is an integer greater than or equal to 16. It can be learned that embodiments of this application provide a FlexE-oriented method for inserting a large quantity of pad blocks into a data stream, are applicable to a PHY interface of a higher rate such as an 800GE PHY interface or a 1.6TE PHY interface, and can adapt to evolution of an Ethernet standard. In addition, when the quantity of the plurality of pad blocks consecutively found in the first data stream by the FlexE shim at the receiving end is greater than the preset threshold and is less than or equal to n, it is determined that the pad sequence is found, that is, it is determined that pad detection succeeds, and it is not required that the quantity of the plurality of pad blocks consecutively found is definitely equal to n, that is, not all pad blocks in the pad sequence need to be correctly detected. Therefore, a process of searching for the pad sequence by the FlexE shim at the receiving end is relaxed, a fault tolerance capability of searching for the pad sequence is good, and a success probability of searching for the pad sequence can be maintained without degradation.

The following describes the technical solutions of this application. An application scenario of this application is first described.

FIG. 7 is a diagram of an application scenario according to an embodiment of this application. This application scenario provides a communication system. The communication system includes a transmitting end and a receiving end. The transmitting end is communicatively connected to the receiving end. For example, the transmitting end is connected to the receiving end through an optical fiber.

Specifically, the transmitting end and the receiving end each include a PHY interface, and the PHY interface at the transmitting end is connected to the PHY interface at the receiving end through the optical fiber. For example, the transmitting end includes a PHY interface of at least one rate of 50GE, 100GE, 200GE, 400GE, 800GE, and 1.6TE, and the receiving end includes a PHY interface of at least one rate of 50GE, 100GE, 200GE, 400GE, 800GE, and 1.6TE. As shown in FIG. 7, the transmitting end and the receiving end each include a physical layer (also referred to as a PHY layer or a PHY chip), and the PHY interface is located at the physical layer. The PHY interface includes a physical coding sublayer (physical coding sublayer, PCS), physical media attachment (physical medium attachment, PMA), and physical media dependent (physical medium dependent, PMD). The transmitting end and the receiving end transmit a data stream through the PHY interfaces. When sending a data stream to the receiving end, the PHY interface at the transmitting end periodically inserts an AM block into the data stream, and sends a data stream including the AM block. After receiving the data stream including the AM block, the PHY interface at the receiving end finds and deletes the AM block in the data stream, and then sends a remaining block to an upper layer for processing. In this way, functions such as multi-channel alignment and block delimitation can be implemented at the physical layer by using an AM block. AM insertion ratios of PHY interfaces of different rates are different. For example, according to a current standard, an AM insertion ratio of a 100GE PHY interface is 1/16384, AM insertion ratios of a 50GE PHY interface, a 200GE PHY interface, a 400GE PHY interface, and an 800GE PHY interface are 1/20480, and an AM insertion ratio of a 1.6TE PHY interface is 1/81920.

In embodiments of this application, the transmitting end and the receiving end both support a FlexE function. The transmitting end and the receiving end each include a FlexE shim and at least one FlexE port. One FlexE port includes at least one PHY interface. For example, one FlexE port includes a plurality of PHY interfaces. An available bandwidth of the FlexE port is a sum of available bandwidths provided by the PHY interfaces in the FlexE port for the FlexE port, and an available bandwidth provided by the PHY interface for the FlexE port is a bandwidth obtained by deducting AM overheads from a bandwidth of the PHY interface. Because AM insertion ratios of PHY interfaces of different rates are different, the PHY interfaces of different rates provide different available bandwidths for the FlexE port. As shown in FIG. 7, the transmitting end and the receiving end each further include a MAC layer, and the FlexE shim is located between the MAC layer and the physical layer. The FlexE shim is used to implement communication between the MAC layer and the physical layer, and implement rate decoupling between the MAC layer and the physical layer. At the transmitting end, after receiving a data stream sent by the MAC layer, the FlexE shim processes the data stream, and then sends a processed data stream to the physical layer. At the receiving end, after receiving a data stream sent by the physical layer, the FlexE shim processes the data stream, and then sends a processed data stream to the MAC layer. Processing performed by the FlexE shim at the transmitting end on the data stream sent by the MAC layer includes: performing slot mapping on the data stream, inserting a pad block into the data stream, performing interleaving on a plurality of data streams, and the like. Processing performed by the FlexE shim at the receiving end on the data stream sent by the physical layer includes: performing de-interleaving on the data stream, searching for and deleting a pad block in the data stream, performing slot demapping on the data stream, and the like. As shown in FIG. 7, in this embodiment of this application, the FlexE shim at the transmitting end and the FlexE shim at the receiving end each include a pad processing module. The pad processing module in the FlexE shim at the transmitting end inserts a pad block into a data stream, and the pad processing module in the FlexE shim at the receiving end searches for and deletes a pad block in a data stream. The pad processing module in the FlexE shim at the transmitting end is also referred to as a pad insertion module, and the pad processing module in the FlexE shim at the receiving end is also referred to as a pad deletion module. A data stream exchanged between the MAC layer and the FlexE shim is also referred to as a FlexE client data stream.

In embodiments of this application, the FlexE shim at the transmitting end may first insert a pad block into a data stream, and then interleave a plurality of data streams including pad blocks. Correspondingly, the FlexE shim at the receiving end may first de-interleave a data stream to obtain a plurality of data streams, and then search for and delete pad blocks in the plurality of data streams. Alternatively, the FlexE shim at the transmitting end may first interleave a plurality of data streams, and then insert a pad block into an interleaved data stream. Correspondingly, the FlexE shim at the receiving end may first search for and delete the pad block in the data stream, and then de-interleave a data stream obtained by deleting the pad block. Based on this, the following describes the application scenario of embodiments of this application in two cases.

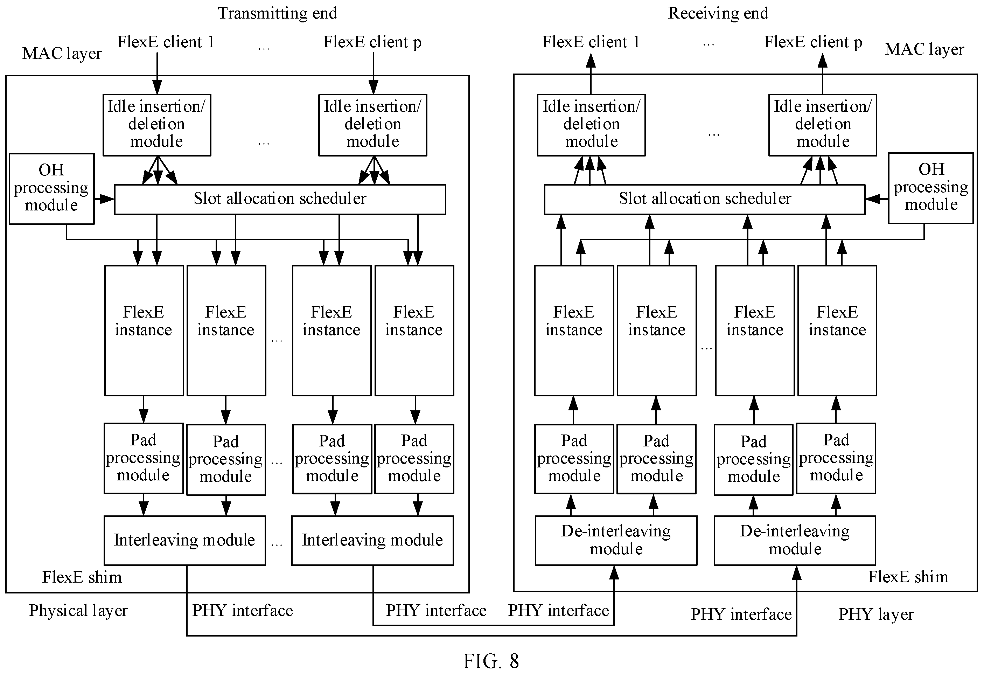

**First case:** The FlexE shim at the transmitting end first inserts a pad block into a data stream, and then interleaves a plurality of data streams including pad blocks. Correspondingly, the FlexE shim at the receiving end first performs de-interleaving on a data stream to obtain a plurality of data streams, and then searches for and deletes pad blocks in the plurality of data streams. FIG. 8 is a diagram of another application scenario according to an embodiment of this application. A communication system provided in the application scenario includes a transmitting end and a receiving end. The transmitting end and the receiving end each include a MAC layer, a FlexE shim, and a physical layer.

As shown in FIG. 8, the FlexE shim at the transmitting end includes an overhead (overhead, OH) processing module, a slot allocation scheduler (calendar), p idle (idle) insertion/deletion modules, a plurality of FlexE instances, a plurality of pad processing modules, and a plurality of interleaving modules, where p is a positive integer. The OH processing module, the p idle insertion/deletion modules, and the plurality of FlexE instances are separately connected to the slot allocation scheduler, the OH processing module is separately connected to the plurality of FlexE instances, the plurality of FlexE instances are connected to the plurality of pad processing modules in one-to-one correspondence, each interleaving module is connected to at least two pad processing modules, and different interleaving modules are connected to different pad processing modules. In addition, the interleaving module at the transmitting end is connected to a PHY interface at the transmitting end. For example, the plurality of interleaving modules at the transmitting end are connected to a plurality of PHY interfaces at the transmitting end in one-to-one correspondence.

As shown in FIG. 8, the FlexE shim at the receiving end includes an OH processing module, a slot allocation scheduler, p idle insertion/deletion modules, a plurality of FlexE instances, a plurality of pad processing modules, and a plurality of de-interleaving modules. The OH processing module, the p idle insertion/deletion modules, and the plurality of FlexE instances are separately connected to the slot allocation scheduler, the OH processing module is separately connected to the plurality of FlexE instances, the plurality of FlexE instances are connected to the plurality of pad processing modules in one-to-one correspondence, each of the plurality of de-interleaving modules is connected to at least two pad processing modules, and different de-interleaving modules are connected to different pad processing modules. In addition, the de-interleaving module at the receiving end is connected to a PHY interface at the receiving end. For example, the plurality of de-interleaving modules at the receiving end are connected to a plurality of PHY interfaces at the receiving end in one-to-one correspondence.

As shown in FIG. 8, the plurality of PHY interfaces at the transmitting end are connected to the plurality of PHY interfaces at the receiving end in one-to-one correspondence.

As shown in FIG. 8, FlexE clients 1 to p are p data streams exchanged between the MAC layer and the FlexE shim, the p data streams are all 64B/66B-encoded data streams, and each of the p data streams includes a plurality of blocks in a length of 66 bits. The interleaving module in the FlexE shim at the transmitting end is also referred to as a 66b interleaving module, and the de-interleaving module in the FlexE shim at the receiving end is also referred to as a 66b de-interleaving module.

Refer to FIG. 8. A processing procedure at the transmitting end includes: The MAC layer obtains the p data streams (that is, the FlexE clients 1 to p), and sends the p data streams to the FlexE shim. The FlexE shim processes the p data streams, and sends processed data streams to the physical layer. The physical layer performs some physical layer processing (for example, inserting AM blocks into the data streams) on the data streams sent by the FlexE shim, and sends processed data streams to the receiving end through the PHY interfaces.

Refer to FIG. 8. A processing procedure of the FlexE shim at the transmitting end is as follows:
Each of the p idle insertion/deletion modules is configured to: receive one data stream (FlexE client) sent by the MAC layer, perform idle insertion/deletion (inserting an idle block into the data stream or deleting some blocks from the data stream) on the data stream, and send, to the slot allocation scheduler, a data stream obtained by idle insertion/deletion. A rate of the data stream can adapt to a rate of the slot allocation scheduler by performing idle insertion/deletion on the data stream.

The slot allocation scheduler is configured to: receive p data streams sent by the p idle insertion/deletion modules, perform slot mapping on the p data streams in a TDM manner, to obtain a plurality of data streams mixed with blocks of the p data streams (each of the plurality of data streams includes blocks in a plurality of data streams in the p data streams), separately insert OH blocks into the plurality of data streams under control of the OH processing module, and send, to the plurality of FlexE instances in one-to-one correspondence, a plurality of data streams into which the OH blocks are inserted.

Each of the plurality of FlexE instances is configured to: receive one data stream sent by the slot allocation scheduler, perform sub-slot mapping on the data stream in a TDM manner, insert an OH block into the data stream under control of the OH processing module, and send, to a corresponding pad processing module, a data stream into which the OH block is inserted. The FlexE instance is also referred to as a sub-slot allocation scheduler (sub calendar), and the FlexE instance may be a 100GE FlexE instance. This is not limited in embodiments of this application.

Each of the plurality of pad processing modules is configured to: receive one data stream sent by a corresponding FlexE instance, periodically insert a pad sequence into the data stream, and send, to a corresponding interleaving module, a data stream into which the pad sequence is inserted. The pad sequence includes n consecutive pad blocks. For the application scenario shown in FIG. 8, n is an integer greater than or equal to 4.

Each of the plurality of interleaving modules is configured to: receive a plurality of data streams that are sent by a plurality of corresponding pad processing modules and that include pad sequences, interleave the plurality of data streams to obtain one interleaved data stream, and send the data stream to the physical layer.

Refer to FIG. 8. A processing procedure at the receiving end includes: The physical layer receives a data stream through the PHY interface, and the physical layer performs some physical layer processing on the data stream (for example, deleting an AM block from the data stream), and sends a processed data stream to the FlexE shim. The FlexE shim processes the data stream to obtain p data streams (that is, FlexE clients 1 to p), and sends the p data streams to the MAC layer.

Refer to FIG. 8. A processing procedure of the FlexE shim at the receiving end is as follows:
Each of the plurality of de-interleaving modules is configured to: receive a data stream sent by the physical layer, perform de-interleaving on the data stream to obtain a plurality of data streams, and send the plurality of data streams to the plurality of corresponding pad processing modules in one-to-one correspondence.

Each of the plurality of pad processing modules is configured to: receive one data stream sent by a corresponding de-interleaving module, search for and delete a pad sequence in the data stream, and send, to a corresponding FlexE instance, a data stream obtained by deleting the pad sequence. The pad sequence includes n consecutive pad blocks. For the application scenario shown in FIG. 8, n is an integer greater than or equal to 4.

Each of the plurality of FlexE instances is configured to: receive one data stream sent by a corresponding pad processing module, search for and delete an OH block in the data stream under control of the OH processing module, perform sub-slot demapping on the data stream in a TDM manner, and send a demapped data stream to the slot allocation scheduler. The FlexE instance is also referred to as a sub-slot allocation scheduler (sub calendar), and the FlexE instance may be a 100GE FlexE instance. This is not limited in embodiments of this application.

The slot allocation scheduler is configured to: receive a plurality of data streams sent by the plurality of FlexE instances, search for and delete, under control of the OH processing module, OH blocks in the plurality of data streams, perform slot demapping on the plurality of data streams in a TDM manner to obtain p data streams, and send the p data streams to the p idle insertion/deletion modules in one-to-one correspondence.

Each of the p idle insertion/deletion modules is configured to: receive one data stream sent by the slot allocation scheduler, perform idle insertion/deletion (inserting an idle block into the data stream or deleting some blocks from the data stream) on the data stream to obtain one FlexE client, and send the FlexE client to the MAC layer.

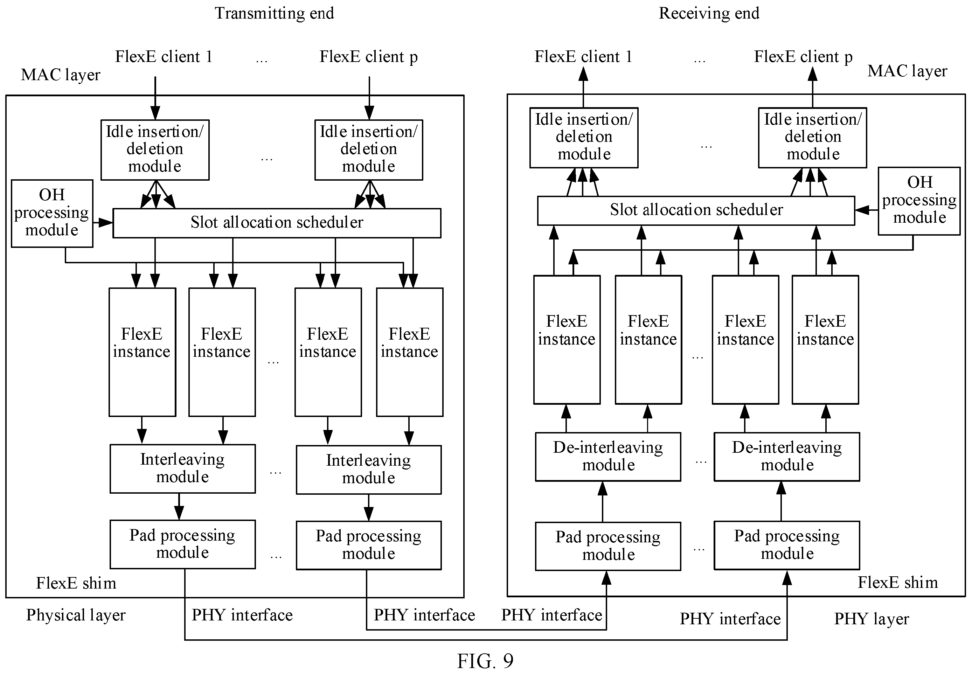

**Second case:** The FlexE shim at the transmitting end first interleaves a plurality of data streams, and then inserts a pad block into an interleaved data stream. Correspondingly, the FlexE shim at the receiving end first searches for and deletes the pad block in the data stream, and then de-interleaves a data stream obtained by deleting the pad block. FIG. 9 is a diagram of still another application scenario according to an embodiment of this application. A communication system provided in the application scenario includes a transmitting end and a receiving end. The transmitting end and the receiving end each include a MAC layer, a FlexE shim, and a physical layer.

As shown in FIG. 9, the FlexE shim at the transmitting end includes an OH processing module, a slot allocation scheduler, p idle insertion/deletion modules, a plurality of FlexE instances, a plurality of interleaving modules, and a plurality of pad processing modules, where p is a positive integer. The OH processing module, the p idle insertion/deletion modules, and the plurality of FlexE instances are separately connected to the slot allocation scheduler, the OH processing module is separately connected to the plurality of FlexE instances, each interleaving module is connected to at least two FlexE instances, different interleaving modules are connected to different FlexE instances, and the plurality of interleaving modules are connected to the plurality of pad processing modules in one-to-one correspondence. In addition, the pad processing module at the transmitting end is connected to a PHY interface at the transmitting end. For example, the plurality of pad processing modules at the transmitting end are connected to a plurality of PHY interfaces at the transmitting end in one-to-one correspondence.

As shown in FIG. 9, the FlexE shim at the receiving end includes an OH processing module, a slot allocation scheduler, p idle insertion/deletion modules, a plurality of FlexE instances, a plurality of de-interleaving modules, and a plurality of pad processing modules. The OH processing module, the p idle insertion/deletion modules, and the plurality of FlexE instances are separately connected to the slot allocation scheduler, the OH processing module is separately connected to the plurality of FlexE instances, each of the plurality of de-interleaving modules is connected to at least two FlexE instances, different de-interleaving modules are connected to different FlexE instances, and the plurality of pad processing modules are connected to the plurality of de-interleaving modules in one-to-one correspondence. In addition, the pad processing module in the FlexE shim at the receiving end is connected to a PHY interface at the receiving end. For example, the plurality of pad processing modules at the receiving end are connected to a plurality of PHY interfaces at the receiving end in one-to-one correspondence.

As shown in FIG. 9, the plurality of PHY interfaces at the transmitting end are connected to the plurality of PHY interfaces at the receiving end in one-to-one correspondence.

As shown in FIG. 9, FlexE clients 1 to p are p data streams exchanged between the MAC layer and the FlexE shim, the p data streams are all 64B/66B-encoded data streams, and each of the p data streams includes a plurality of blocks in a length of 66 bits.

Refer to FIG. 9. A processing procedure at the transmitting end includes: The MAC layer obtains the p data streams (that is, the FlexE clients 1 to p), and sends the p data streams to the FlexE shim. The FlexE shim processes the p data streams, and sends processed data streams to the physical layer. The physical layer performs some physical layer processing (for example, inserting AM blocks into the data streams) on the data streams sent by the FlexE shim, and sends processed data streams to the receiving end through the PHY interfaces.

Refer to FIG. 9. A processing procedure of the FlexE shim at the transmitting end is as follows:
Each of the p idle insertion/deletion modules is configured to: receive one data stream (FlexE client) sent by the MAC layer, perform idle insertion/deletion (inserting an idle block into the data stream or deleting some blocks from the data stream) on the data stream, and send, to the slot allocation scheduler, a data stream obtained by idle insertion/deletion. A rate of the data stream can adapt to a rate of the slot allocation scheduler by performing idle insertion/deletion on the data stream.

The slot allocation scheduler is configured to: receive p data streams sent by the p idle insertion/deletion modules, perform slot mapping on the p data streams in a TDM manner, to obtain a plurality of data streams mixed with blocks of the p data streams, separately insert OH blocks into the plurality of data streams under control of the OH processing module, and send, to the plurality of FlexE instances in one-to-one correspondence, a plurality of data streams into which the OH blocks are inserted.

Each of the plurality of FlexE instances is configured to: receive one data stream sent by the slot allocation scheduler, perform sub-slot mapping on the data stream in a TDM manner, insert an OH block into the data stream under control of the OH processing module, and send, to a corresponding interleaving module, a data stream into which the OH block is inserted. The FlexE instance is also referred to as a sub-slot allocation scheduler, and the FlexE instance may be a 100GE FlexE instance. This is not limited in embodiments of this application.

Each of the plurality of interleaving modules is configured to: receive a plurality of data streams sent by a plurality of corresponding FlexE instances, interleave the plurality of data streams to obtain one interleaved data stream, and send the interleaved data stream to a corresponding pad processing module.

Each of the plurality of pad processing modules is configured to: receive one data stream sent by a corresponding interleaving module, periodically insert a pad sequence into the data stream, and send, to the physical layer, the data stream into which the pad sequence is inserted. The pad sequence includes n consecutive pad blocks. For the application scenario shown in FIG. 9, n is an integer greater than or equal to 16.

Refer to FIG. 9. A processing procedure at the receiving end includes: The physical layer receives a data stream through the PHY interface, and the physical layer performs some physical layer processing on the data stream (for example, deleting an AM block from the data stream), and sends a processed data stream to the FlexE shim. The FlexE shim processes the data stream to obtain p data streams (that is, FlexE clients 1 to p), and sends the p data streams to the

MAC layer.

Refer to FIG. 9. A processing procedure of the FlexE shim at the receiving end is as follows:
Each of the plurality of pad processing modules is configured to: receive a data stream sent by the physical layer, search for and delete a pad sequence in the data stream, and send, to a corresponding de-interleaving module, a data stream obtained by deleting the pad sequence. The pad sequence includes n consecutive pad blocks. For the application scenario shown in FIG. 9, n is an integer greater than or equal to 16.

Each of the plurality of de-interleaving modules is configured to: receive one data stream sent by a corresponding pad processing module, perform de-interleaving on the data stream to obtain a plurality of data streams, and send the plurality of data streams to a plurality of corresponding FlexE instances in one-to-one correspondence.

Each of the plurality of FlexE instances is configured to: receive one data stream sent by a corresponding de-interleaving module, search for and delete an OH block in the data stream under control of the OH processing module, perform sub-slot demapping on the data stream in a TDM manner, and send a demapped data stream to the slot allocation scheduler. The FlexE instance is also referred to as a sub-slot allocation scheduler, and the FlexE instance may be a 100GE FlexE instance. This is not limited in embodiments of this application.

The slot allocation scheduler is configured to: receive a plurality of data streams sent by the plurality of FlexE instances, search for and delete, under control of the OH processing module, OH blocks in the plurality of data streams, perform slot demapping on the plurality of data streams in a TDM manner to obtain p data streams, and send the p data streams to the p idle insertion/deletion modules in one-to-one correspondence.

Each of the p idle insertion/deletion modules is configured to: receive one data stream sent by the slot allocation scheduler, perform idle insertion/deletion (inserting an idle block into the data stream or deleting some blocks from the data stream) on the data stream to obtain one FlexE client, and send the FlexE client to the MAC layer.

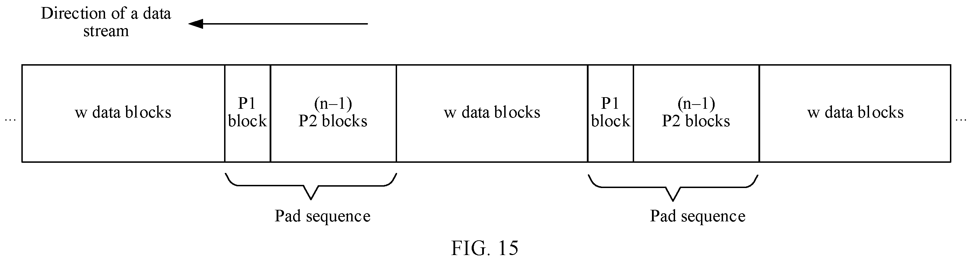

It can be learned from FIG. 8 and FIG. 9 that, in the application scenario shown in FIG. 8, at the transmitting end, a processing procedure of the pad processing module (specifically, a pad insertion module) is performed before a processing procedure of the interleaving module, and at the receiving end, a processing procedure of the de-interleaving module is performed before a processing procedure of the pad processing module (specifically, a pad deletion module). In the application scenario shown in FIG. 9, at the transmitting end, a processing procedure of the interleaving module is performed before a processing procedure of the pad processing module (specifically, a pad insertion module), and at the receiving end, a processing procedure of the pad processing module (specifically, a pad deletion module) is performed before a processing procedure of the de-interleaving module. For the application scenario shown in FIG. 8, at the transmitting end, pad sequences inserted by different pad processing modules connected to a same interleaving module into data streams may have different structures, periodicities, and the like. For example, different pad insertion modules may insert the pad sequences into the data streams in different insertion manners in a plurality of insertion manners (for example, insertion manners provided in the following method embodiments, for example, insertion manners provided in FIG. 15 to FIG. 21) provided in embodiments of this application, and therefore pad sequences included in the plurality of data streams interleaved by the interleaving module may be different. For the application scenario shown in FIG. 9, at the transmitting end, pad sequences inserted by different pad processing modules connected to different interleaving modules into data streams may have different structures, periodicities, and the like. For example, different pad processing modules may insert the pad sequences into the data streams in different insertion manners in the plurality of insertion manners provided in this embodiment of this application. It can be learned that, in embodiments of this application, differentiated pad sequence insertion is supported, so that some pad processing modules can reduce complexity in functions of inserting a pad sequence, and some other pad processing modules introduce slightly higher complexity in functions of inserting a pad sequence to improve performance. This is not limited in embodiments of this application.

It should be noted that the transmitting end and the receiving end in embodiments of this application both support a FlexE function. For example, the transmitting end and the receiving end are both forwarding devices, user terminal devices, or server devices that support the FlexE function. The forwarding device may be a router or a switch. For example, the transmitting end and the receiving end are both forwarding devices, user terminal devices, or server devices in a slicing packet network (slicing packet network, SPN). In some embodiments, the transmitting end is also referred to as a transmitting end device, and the receiving end is also referred to as a receiving end device. In addition, the transmitting end and the receiving end are relative. In some embodiments, the transmitting end in embodiments of this application may be used as a receiving end, and the receiving end in embodiments of this application may be used as a transmitting end. The foregoing descriptions about the transmitting end and the receiving end are merely examples. The transmitting end and the receiving end may further have other structures and/or functions that are not shown and/or not described above. This is not limited in embodiments of this application, and details are not described herein. In addition, the application scenarios described above are merely used as examples of the application scenario of embodiments of this application, and are not intended to limit the application scenario of embodiments of this application. The application scenario of embodiments of this application may be flexibly adjusted with service development.

The foregoing describes the application scenario of this application, and the following describes method embodiments of this application.

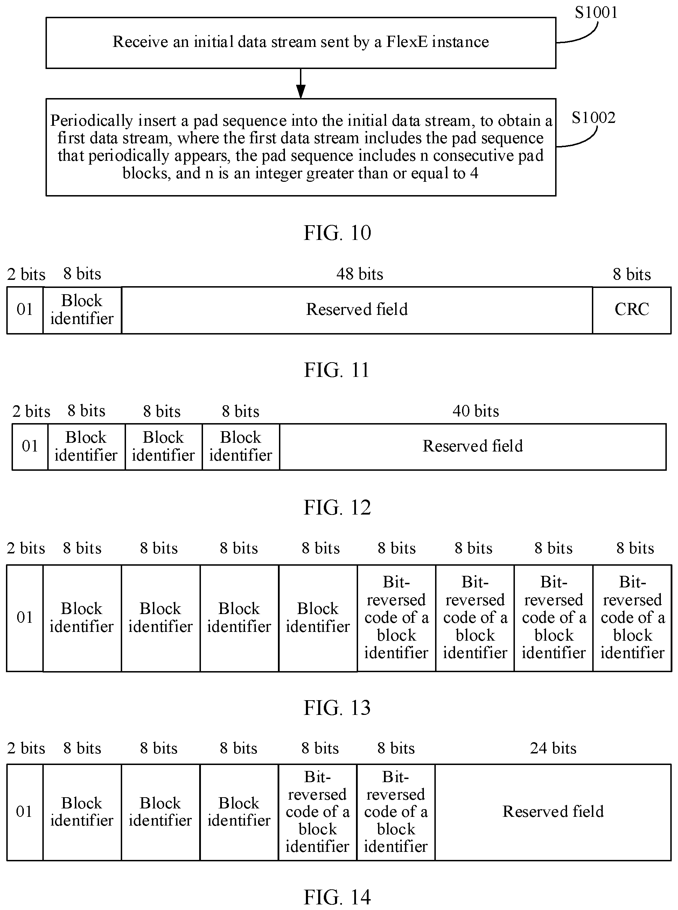

FIG. 10 is a flowchart of a data processing method according to an embodiment of this application. The data processing method is applied to FlexE. The data processing method is performed by a FlexE shim at a transmitting end, and is specifically performed by a pad processing module in the FlexE shim. Optionally, the FlexE shim at the transmitting end includes a plurality of pad processing modules, and the data processing method is performed by any one of the plurality of pad processing modules. For example, the data processing method shown in FIG. 10 is performed by any pad processing module in the FlexE shim at the transmitting end shown in FIG. 8. Refer to FIG. 10. The data processing method includes steps S1001 and S1002.

S1001: Receive an initial data stream sent by a FlexE instance.

In the FlexE shim at the transmitting end, the FlexE instance may send a data stream to the pad processing module, and the pad processing module receives the data stream sent by the FlexE instance. For ease of differentiation, in this embodiment, the data stream sent by the FlexE instance to the pad processing module is referred to as an initial data stream.

S1002: Periodically insert a pad sequence into the initial data stream, to obtain a first data stream, where the first data stream includes the pad sequence that periodically appears, the pad sequence includes n consecutive pad blocks, and n is an integer greater than or equal to 4.

In the FlexE shim at the transmitting end, that the pad processing module periodically inserts the pad sequence into the initial data stream means that the pad processing module inserts a pad sequence into the initial data stream after every a specific quantity of blocks. The first data stream includes the pad sequence that periodically appears. A periodicity in which the pad sequence appears in the first data stream may be set based on an actual situation. This is not limited in this embodiment of this application.

In this embodiment of this application, the pad sequence that periodically appears in the first data stream includes n consecutive pad blocks. The n pad blocks are all 64B/66B-encoded blocks, and the n pad blocks each have a length of 66 bits. In an optional embodiment, the n pad blocks include a first pad block and a second pad block. The first pad block is a control block that is globally unique in the first data stream. The second pad block is an error block. For example, the first pad block is the P1 block shown in FIG. 5, and the second pad block is the P2 block shown in FIG. 6.

In an optional embodiment, the n pad blocks further include at least one third pad block, and the third pad block is a data block.

In an optional embodiment, the third pad block includes at least one block identifier, a block identifier included in any third pad block is used to uniquely identify the third pad block, and a block identifier included in any third pad block is used by a pad processing module in a FlexE shim at a receiving end to identify (or detect or searching for) the third pad block. The block identifier may include one of or a combination of a plurality of digits, English letters, and American standard code for information interchange (American standard code for information interchange, ASCII) of Chinese characters. For example, the block identifier may be a number such as 1, 2, 3, or 4, or may be a letter such as A, B, C, or D, or may be an ASCII of a Chinese character such as jia, yi, bing, or ding. The block identifier may be a sequence number (sequence number). Optionally, for any third pad block, when the third pad block includes a plurality of block identifiers, a quantity of the plurality of block identifiers may be an odd number or an even number, and the plurality of block identifiers may be the same or may be different. This is not limited in this embodiment of this application. In this embodiment of this application, the third pad block is set to include a plurality of block identifiers, to avoid a case in which the pad processing module in the FlexE shim at the receiving end cannot identify the third pad block because a bit error occurs in one or more block identifiers in the third pad block in a process of transmitting the third pad block. For example, if the third pad block includes only one block identifier, and a bit error occurs in the block identifier in the process of transmitting the third pad block, the pad processing module in the FlexE shim at the receiving end cannot identify the block identifier, and therefore cannot identify the third pad block. If the third pad block includes a plurality of block identifiers, in a process of transmitting the third pad block, provided that the third pad block includes a block identifier in which no bit error occurs, the pad processing module in the FlexE shim at the receiving end can identify the block identifier in which no bit error occurs, and identify the third pad block based on the block identifier in which no bit error occurs.

In an optional embodiment, the third pad block further includes at least one check identifier. That is, the third pad block includes the at least one block identifier and the at least one check identifier, and the at least one check identifier is used to check correctness of the at least one block identifier. The check identifier may be a cyclic redundancy check (cyclic redundancy check, CRC) code, or may be a bit-reversed code of a block identifier (that is, the check identifier may be obtained by performing bit reversal on the block identifier). For example, the block identifier is a sequence number (sequence number), and the bit-reversed code of the block identifier is a bit-reversed sequence number (bit-reversed sequence number). Optionally, for any third pad block, when the third pad block includes a plurality of check identifiers, a quantity of the plurality of check identifiers may be an odd number or an even number, and the plurality of check identifiers may be the same or may be different. This is not limited in this embodiment of this application. In this embodiment of this application, the third pad block is set to include a plurality of check identifiers, to avoid a case in which the pad processing module in the FlexE shim at the receiving end cannot check correctness of a block identifier in the third pad block because a bit error occurs in one or more check identifiers in the third pad block in a process of transmitting the third pad block. For example, if the third pad block includes only one check identifier and a bit error occurs in the check identifier in the process of transmitting the third pad block, the pad processing module in the FlexE shim at the receiving end cannot identify the check identifier, and therefore cannot check correctness of the block identifier in the third pad block. If the third pad block includes a plurality of check identifiers, in a process of transmitting the third pad block, provided that the third pad block includes a check identifier in which no bit error occurs, the pad processing module in the FlexE shim at the receiving end can identify the check identifier in which no bit error occurs, and check correctness of the block identifier in the third pad block based on the check identifier in which no bit error occurs.

In an optional embodiment, for any third pad block, when the third pad block includes at least one block identifier and at least one check identifier, a quantity of the at least one block identifier is equal to a quantity of the at least one check identifier. For example, the quantity of the at least one block identifier and the quantity of the at least one check identifier are both 1, 2, 3, or 4. Alternatively, a sum of the quantity of the at least one block identifier and the quantity of the at least one check identifier is an odd number. For example, the sum of the quantity of the at least one block identifier and the quantity of the at least one check identifier is 3, 5, or 7. In this embodiment of this application, the quantity of block identifiers is set to be equal to the quantity of check identifiers in the third pad block, or the sum of the quantity of block identifiers and the quantity of check identifiers is set to an odd number, to facilitate identification of the third pad block by the pad processing module in the FlexE shim at the receiving end. For example, for any third pad block, when a quantity of block identifiers is equal to a quantity of check identifiers in the third pad block, the block identifiers are in one-to-one correspondence with the check identifiers in the third pad block, and each check identifier is used to check correctness of a corresponding block identifier. When check on at least one block identifier in the third pad block succeeds, the pad processing module in the FlexE shim at the receiving end considers that the at least one block identifier is correct, and the pad processing module considers that the third pad block is successfully identified. That is, the pad processing module finds the third pad block. It can be learned that when the quantity of block identifiers is equal to the quantity of check identifiers in the third pad block, the pad processing module in the FlexE shim at the receiving end can conveniently identify the third pad block. For another example, for any third pad block, when a sum of a quantity of block identifiers and a quantity of check identifiers in the third pad block is an odd number, in a process of identifying (or detecting or searching for) the third pad block by the pad processing module in the FlexE shim at the receiving end, if the pad processing module determines that a sum of a quantity of correct block identifiers and a quantity of correct check identifiers in the third pad block exceeds a half of the sum of the quantity of block identifiers and the quantity of check identifiers in the third pad block, the pad processing module considers that the third pad block is successfully identified. That is, the pad processing module finds the third pad block. It can be learned that when the sum of the quantity of block identifiers and the quantity of check identifiers in the third pad block is an odd number, the pad processing module in the FlexE shim at the receiving end can conveniently identify the third pad block. Optionally, when the sum of the quantity of block identifiers and the quantity of check identifiers in the third pad block is an odd number, the half of the sum of the quantity of block identifiers and the quantity of check identifiers in the third pad block is not an integer. In this case, the half of the sum of the quantity of block identifiers and the quantity of check identifiers in the third pad block may be rounded up for identification and determining. This is not limited in this embodiment of this application.

In an optional embodiment, in the third pad block, a length of the block identifier is equal to a length of the check identifier. For example, the length of the block identifier and the length of the check identifier are both 8 bits.

In an example, FIG. 11 is a diagram of a third pad block according to an embodiment of this application. A length of the third pad block is 66 bits. The 1^{st} and 2^{nd} bits in the third pad block indicate a type of the third pad block, and a value "10" of the 1^{st} and 2^{nd} bits indicates that the third pad block is a data block. The 3^{rd} to 10^{th} bits in the third pad block represent a block identifier of the third pad block. The 59^{th} to 66^{th} bits in the third pad block are a check identifier, and the check identifier is a CRC code. A part (namely, the 11^{th} to 58^{th} bits) between the block identifier and the check identifier is a reserved field. The CRC code (namely, the check identifier) is obtained by performing CRC calculation based on the block identifier. The check identifier is a CRC code, to facilitate check on correctness of the block identifier in the third pad block based on the CRC code by the pad processing module in the FlexE shim at the receiving end by using an encoder, a circuit, and the like.

For another example, FIG. 12 is a diagram of another third pad block according to an embodiment of this application. A length of the third pad block is 66 bits. The 1^{st} and 2^{nd} bits in the third pad block indicate a type of the third pad block, and a value "10" of the 1^{st} and 2^{nd} bits indicates that the third pad block is a data block. The 3^{rd} to 10^{th} bits, the 11^{th} to 18^{th} bits, and the 19^{th} to 26^{th} bits in the third pad block all represent block identifiers of the third pad block. The third pad block includes three block identifiers, a length of each block identifier is 8 bits, and the three block identifiers may be the same or different. The 27^{th} to 66^{th} bits in the third pad block are a reserved field. In this example, the third pad block is set to include an odd number of block identifiers, to avoid a case in which the pad processing module in the FlexE shim at the receiving end cannot identify the third pad block because a bit error occurs in one or more block identifiers in the third pad block in a process of transmitting the third pad block. For example, in a process of identifying (or detecting or searching for) the third pad block by the pad processing module in the FlexE shim at the receiving end, if the pad processing module determines that a quantity of correct block identifiers in the third pad block exceeds a half of a total quantity of block identifiers in the third pad block, the pad processing module considers that the third pad block is successfully identified. That is, the pad processing module finds the third pad block. It can be learned that even if a bit error exists in some block identifiers in the third pad block, the pad processing module can still find the third pad block. Optionally, when the quantity of block identifiers in the third pad block is an odd number, the half of the quantity of block identifiers in the third pad block is not an integer, and the pad processing module in the FlexE shim at the receiving end may round up the half of the quantity of block identifiers in the third pad block for identification and determining. This is not limited in this embodiment of this application.

For still another example, FIG. 13 is a diagram of still another third pad block according to an embodiment of this application. A length of the third pad block is 66 bits. The 1^{st} and 2^{nd} bits in the third pad block indicate a type of the third pad block, and a value "10" of the 1^{st} and 2^{nd} bits indicates that the third pad block is a data block. The 3^{rd} to 10^{th} bits, the 11^{th} to 18^{th} bits, the 19^{th} to 26^{th} bits, and the 27^{th} to 34^{th} bits in the third pad block all represent block identifiers of the third pad block. The 35^{th} to 42^{nd} bits, the 43^{rd} to 50^{th} bits, the 51^{st} to 58^{th} bits, and the 59^{th} to 66^{th} bits in the third pad block all represent check identifiers, and the check identifier is a bit-reversed code of the block identifier. The third pad block shown in FIG. 13 includes four block identifiers and four check identifiers. A length of each block identifier is 8 bits, and the four block identifiers may be the same or different. A length of each check identifier is 8 bits, and the four check identifiers may be the same or different. A quantity of block identifiers is equal to a quantity of check identifiers in the third pad block shown in FIG. 13. Optionally, the four block identifiers are in one-to-one correspondence with the four block identifiers, each check identifier is a bit-reversed code of a corresponding block identifier, and each check identifier is used to check correctness of the corresponding block identifier. When check on at least one of the four block identifiers succeeds, the pad processing module in the FlexE shim at the receiving end considers that the at least one block identifier is correct, and the pad processing module considers that the third pad block is successfully identified. That is, the pad processing module finds the third pad block. It can be learned that the quantity of block identifiers is equal to the quantity of check identifiers in the third pad block, to facilitate identification of the third pad block by the pad processing module in the FlexE shim at the receiving end.

For yet another example, FIG. 14 is a diagram of yet another third pad block according to an embodiment of this application. A length of the third pad block is 66 bits. The 1^{st} and 2^{nd} bits in the third pad block indicate a type of the third pad block, and a value "10" of the 1^{st} and 2^{nd} bits indicates that the third pad block is a data block. The 3^{rd} to 10^{th} bits, the 11^{th} to 18^{th} bits, and the 19^{th} to 26^{th} bits in the third pad block all represent block identifiers of the third pad block. The 27^{th} to 34^{th} bits and the 35^{th} to 42^{nd} bits in the third pad block all represent check identifiers, and the check identifier is a bit-reversed code of the block identifier. The 43^{rd} to 66^{th} bits in the third pad block are a reserved field. The third pad block shown in FIG. 14 includes three block identifiers and two check identifiers. A length of each block identifier is 8 bits, and the three block identifiers may be the same or different. A length of each check identifier is 8 bits, and the two check identifiers may be the same or different. A sum of a quantity of block identifiers and a quantity of check identifiers in the third pad block shown in FIG. 14 is an odd number, to facilitate identification (or detection or searching for) of the third pad block by the pad processing module in the FlexE shim at the receiving end. Specifically, in a process of identifying the third pad block, if the pad processing module in the FlexE shim at the receiving end determines that a sum of a quantity of correct block identifiers and a quantity of correct check identifiers in the third pad block exceeds a half of the sum of the quantity of block identifiers and the quantity of check identifiers in the third pad block, the pad processing module considers that the third pad block is successfully identified. That is, the pad processing module finds the third pad block. It can be learned that even if a bit error exists in some block identifiers and/or check identifiers in the third pad block, the pad processing module can still find the third pad block. Optionally, when the sum of the quantity of block identifiers and the quantity of check identifiers in the third pad block is an odd number, the half of the sum of the quantity of block identifiers and the quantity of check identifiers in the third pad block is not an integer, and the pad processing module in the FlexE shim at the receiving end may round up the half of the sum of the quantity of block identifiers and the quantity of check identifiers in the third pad block for identification and determining. This is not limited in this embodiment of this application.

It should be noted that, the foregoing describes bits in the third pad block in an order from a most significant bit to a least significant bit. The bits in the third pad block may alternatively be described in an order from a least significant bit to a most significant bit. Regardless of an order in which the bits in the third pad block are described, a meaning of each field in the third pad block is not affected. In addition, FIG. 11 to FIG. 14 show only examples of the third pad block in this embodiment of this application. The third pad block may be another block. A position of each field in the third pad block may be flexibly adjusted. This is not limited in this embodiment of this application. In some embodiments, the third pad block is also referred to as a P3 block. A name of the third pad block is not limited in this embodiment of this application.

With reference to the foregoing descriptions, the following describes the pad sequence that periodically appears in the first data stream in this embodiment of this application. As described above, the pad sequence includes the n consecutive pad blocks. In a possible case of this embodiment of this application, the n pad blocks include x first pad blocks and y second pad blocks, x+y=n, and both x and y are positive integers. That is, the n pad blocks include only the first pad block and the second pad block, and do not include the third pad block. In other words, the pad sequence consists of the first pad block and the second pad block. In another possible case of this embodiment of this application, the n pad blocks include x first pad blocks, y second pad blocks, and z third pad blocks, x+y+z=n, and x, y, and z are all positive integers. That is, the n pad blocks include the first pad block, the second pad block, and the third pad block. In other words, the pad sequence consists of the first pad block, the second pad block, and the third pad block.

In an optional embodiment, the first data stream satisfies any one of the following six implementations.

**First implementation:** The first data stream includes the pad sequence that periodically appears, the pad sequence includes the n consecutive pad blocks, the n pad blocks include x first pad blocks and y second pad blocks, x=1, y=n-1, the y second pad blocks are located after the x first pad blocks, the y second pad blocks are consecutive, and the y second pad blocks are consecutive to the x first pad blocks. That is, the n pad blocks include one first pad block and n-1 second pad blocks, the n-1 second pad blocks are located after the first pad block, the n-1 second pad blocks are consecutive, and the n-1 second pad blocks are consecutive to the first pad block.

For example, the first pad block is a P1 block, the second pad block is a P2 block, and the first data stream is shown in FIG. 15. Refer to FIG. 15. There is one pad sequence after every w blocks (the w blocks are referred to as data blocks in FIG. 15) in the first data stream. Each pad sequence includes one P1 block and n-1 P2 blocks. The n-1 P2 blocks are located after the P1 block, the n-1 P2 blocks are consecutive, and the n-1 P2 blocks are consecutive to the P1 block.

**Second implementation:** The first data stream includes the pad sequence that periodically appears, the pad sequence includes the n consecutive pad blocks, the n pad blocks include x first pad blocks and y second pad blocks, n is an even number, x=y=n/2, the y second pad blocks are located after the x first pad blocks, the x first pad blocks are consecutive, the y second pad blocks are consecutive, and the y second pad blocks are consecutive to the x first pad blocks. That is, the n pad blocks include n/2 first pad blocks and n/2 second pad blocks, the n/2 second pad blocks are located after the n/2 first pad blocks, the n/2 first pad blocks are consecutive, the n/2 second pad blocks are consecutive, and the n/2 second pad blocks are consecutive to the n/2 first pad blocks.

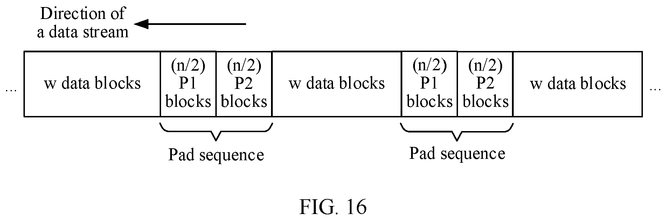

For example, the first pad block is a P1 block, the second pad block is a P2 block, and the first data stream is shown in FIG. 16. Refer to FIG. 16. There is one pad sequence after every w blocks (the w blocks are referred to as data blocks in FIG. 16) in the first data stream. Each pad sequence includes n/2 P1 blocks and n/2 P2 blocks, the n/2 P2 blocks are located after the n/2 P1 blocks, the n/2 P1 blocks are consecutive, the n/2 P2 blocks are consecutive, and the n/2 P2 blocks are consecutive to the n/2 P1 blocks.

**Third implementation:** The first data stream includes the pad sequence that periodically appears, the pad sequence includes the n consecutive pad blocks, the n pad blocks include x first pad blocks and y second pad blocks, n is an even number, and x=y=n/2. The pad sequence includes n/2 block groups, and each block group includes one first pad block and one second pad block. In each block group, the second pad block is located after the first pad block and is consecutive to the first pad block, and the pad blocks in the n/2 block groups are consecutive. That is, the n pad blocks include n/2 first pad blocks and n/2 second pad blocks, and the first pad block and the second pad block are arranged alternately. In other words, the n pad blocks are sequentially arranged in a sequence of a first pad block, a second pad block, a first pad block, a second pad block, ....

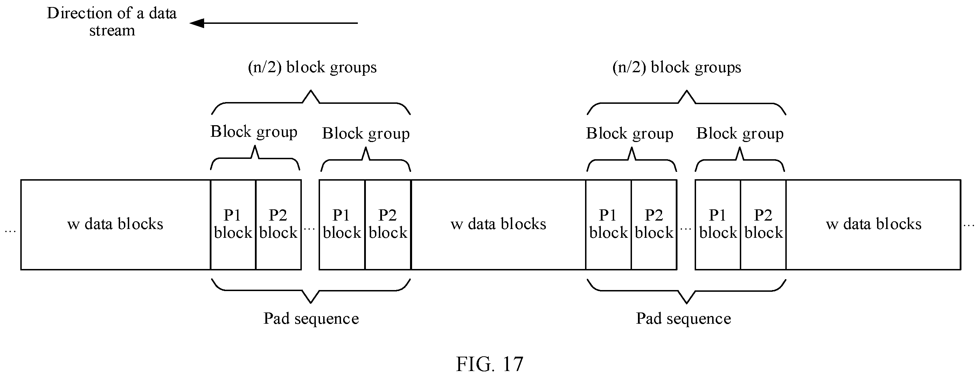

For example, the first pad block is a P1 block, the second pad block is a P2 block, and the first data stream is shown in FIG. 17. Refer to FIG. 17. There is one pad sequence after every w blocks (the w blocks are referred to as data blocks in FIG. 17) in the first data stream. Each pad sequence includes n/2 P1 blocks and n/2 P2 blocks, each pad sequence includes n/2 block groups, each block group includes one P1 block and one P2 block, the P2 block is located after the P1 block and is consecutive to the P1 block, and the pad blocks in the n/2 block groups are consecutive. In other words, the n pad blocks in the pad sequence are sequentially arranged in a sequence of a P1 block, a P2 block, a P1 block, a P2 block, ....

**Fourth implementation:** The first data stream includes the pad sequence that periodically appears, the pad sequence includes the n consecutive pad blocks, the n pad blocks include x first pad blocks and y second pad blocks, the x first pad blocks include x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x+y=n.

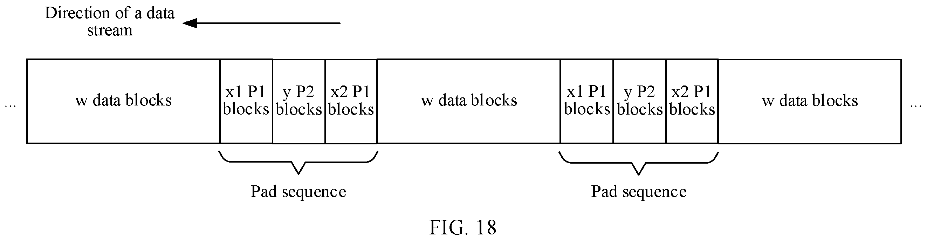

For example, the first pad block is a P1 block, the second pad block is a P2 block, and the first data stream is shown in FIG. 18. Refer to FIG. 18. There is one pad sequence after every w blocks (the w blocks are referred to as data blocks in FIG. 18) in the first data stream. Each pad sequence includes x P1 blocks, y P2 blocks, and x2 P1 blocks. The y P2 blocks are located between the x1 P1 blocks and the x2 P1 blocks. The x1 P1 blocks, the y P2 blocks, and the x2 P1 blocks are consecutive.

**Fifth implementation:** The first data stream includes the pad sequence that periodically appears, the pad sequence includes the n consecutive pad blocks, the n pad blocks include x first pad blocks, y second pad blocks, and z third pad blocks, x+y+z=n, the y second pad blocks are located after the x first pad blocks and before the z third pad blocks, and the x first pad blocks, the y second pad blocks, and the z third pad blocks are consecutive. That is, the n pad blocks are arranged in a sequence of the x first pad blocks, the y second pad blocks, and the z third pad blocks.

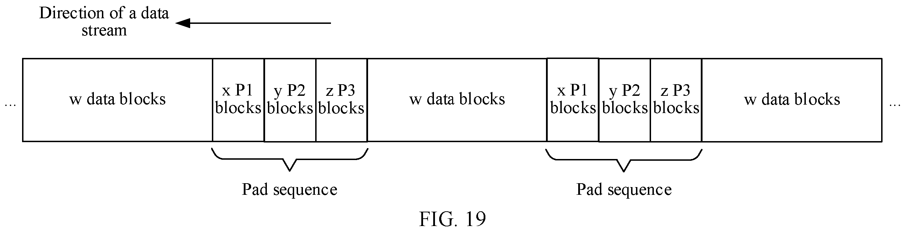

For example, the first pad block is a P1 block, the second pad block is a P2 block, and the third pad block is a P3 block. The first data stream is shown in FIG. 19. Refer to FIG. 19. There is one pad sequence after every w blocks (the w blocks are referred to as data blocks in FIG. 19) in the first data stream. Each pad sequence includes x P1 blocks, y P2 blocks, and z P3 blocks. The y P2 blocks are located after the x P1 blocks and before the z P3 blocks. The x P1 blocks, the y P2 blocks, and the z P3 blocks are consecutive. That is, the n pad blocks in the pad sequence are arranged in a sequence of the x P1 blocks, the y P2 blocks, and the z P3 blocks.

**Sixth implementation:** The first data stream includes the pad sequence that periodically appears, the pad sequence includes the n consecutive pad blocks, the n pad blocks include x first pad blocks, y second pad blocks, and z third pad blocks, x+y+z=n, the z third pad blocks are located after the x first pad blocks and before the y second pad blocks, and the x first pad blocks, the z third pad blocks, and the y second pad blocks are consecutive. That is, the n pad blocks are arranged in a sequence of the x first pad blocks, the z third pad blocks, and the y second pad blocks.

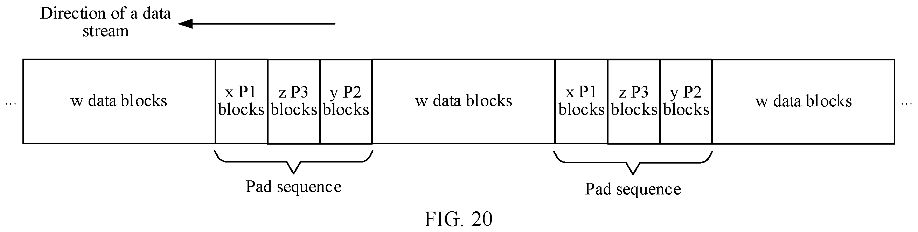

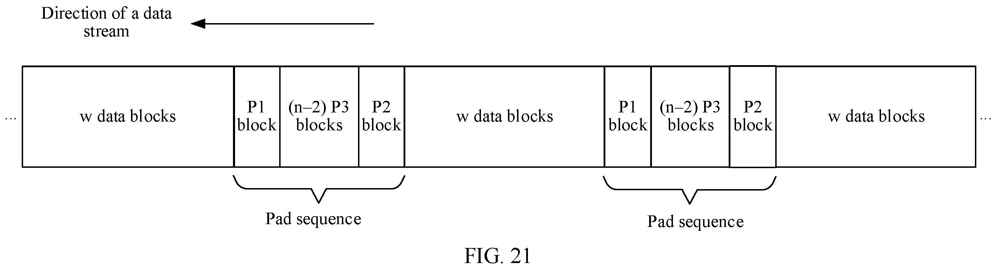

For example, the first pad block is a P1 block, the second pad block is a P2 block, and the third pad block is a P3 block. The first data stream is shown in FIG. 20. Refer to FIG. 20. There is one pad sequence after every w blocks (the w blocks are referred to as data blocks in FIG. 20) in the first data stream. Each pad sequence includes x P1 blocks, y P2 blocks, and z P3 blocks. The z P3 blocks are located after the x P1 blocks and before the y P2 blocks. The x P1 blocks, the z P3 blocks, and the y P2 blocks are consecutive. That is, the n pad blocks in the pad sequence are arranged in a sequence of the x P1 blocks, the z P3 blocks, and the y P2 blocks. In an example, x=1, y=1, and z=n-2. The first data stream is shown in FIG. 21.

It should be noted that, in the first to fourth implementations, because the pad sequence includes only the first pad block (namely, the P1 block) and the second pad block (namely, the P2 block), the first to fourth implementations inherit a pad encapsulation format of a current FlexE standard to a maximum extent, and implementation is simple. In the fifth and sixth implementations, the pad sequence includes the first pad block (namely, the P1 block), the second pad block (namely, the P2 block), and the third pad block (namely, the P3 block). The third pad block may include a block identifier. Therefore, a process of identifying (or detecting or searching for) the third pad block by the pad processing module in the FlexE shim at the receiving end can be simplified. In addition, the fifth and sixth implementations may inherit a pad encapsulation format of the current FlexE standard, to implement smooth evolution of FlexE standards. In addition, in the sixth implementation, the z third pad blocks are set between the x first pad blocks and the y second pad blocks. Because the first pad block and the second pad block are both control blocks, and the third pad block is a data block, in this setting manner, the third pad block is not adjacent to an actual data block in the first data stream. This can avoid confusion between the third pad block and the actual data block in the first data stream, and can avoid pollution caused by the third pad block to the actual data block in the first data stream.

It should be noted that FIG. 15 to FIG. 21 are merely used as examples of the first data stream in this embodiment of this application, and are not used as a limitation on the first data stream. A structure of the pad sequence in the first data stream may also be another structure. A structure of the pad sequence and a quantity of pad blocks (that is, a value of n) in the pad sequence may be flexibly set and adjusted. A periodicity in which the pad sequence appears in the first data stream may be flexibly set and adjusted. That is, a value of w in the descriptions in FIG. 15 to FIG. 21 may be flexibly adjusted. In addition, for different implementations in FIG. 15 to FIG. 21, values of w may be the same or may be different, and values of n may be the same or may be different. This is not limited in this embodiment of this application. For example, a value of n is 2 to the power of i, and i is an integer greater than or equal to 2. For example, a value of n is 4, 8, 16, 32, 64, or the like.

In the embodiment shown in FIG. 10, after the pad processing module in the FlexE shim at the transmitting end obtains the first data stream, the pad processing module sends the first data stream to an interleaving module in the FlexE shim. After the interleaving module receives a plurality of data streams including the first data stream that are sent by the plurality of pad processing modules, the interleaving module interleaves the plurality of data streams, to obtain an interleaved data stream. The interleaving module sends the interleaved data stream to a physical layer at the transmitting end. After performing physical layer-related processing on the data stream (for example, inserting an AM block into the data stream), the physical layer at the transmitting end sends a processed data stream to the receiving end through a PHY interface at the transmitting end.

In conclusion, according to the data processing method provided in this embodiment of this application, the pad processing module in the FlexE shim at the transmitting end periodically inserts the pad sequence into the initial data stream sent by the FlexE instance, to obtain the first data stream. The pad sequence includes the n consecutive pad blocks, and n is an integer greater than or equal to 4. It can be learned that this embodiment of this application provides a FlexE-oriented method for inserting a large quantity of pad blocks into a data stream, is applicable to a PHY interface of a higher rate such as an 800GE PHY interface or a 1.6TE PHY interface, and can adapt to evolution of an Ethernet standard.

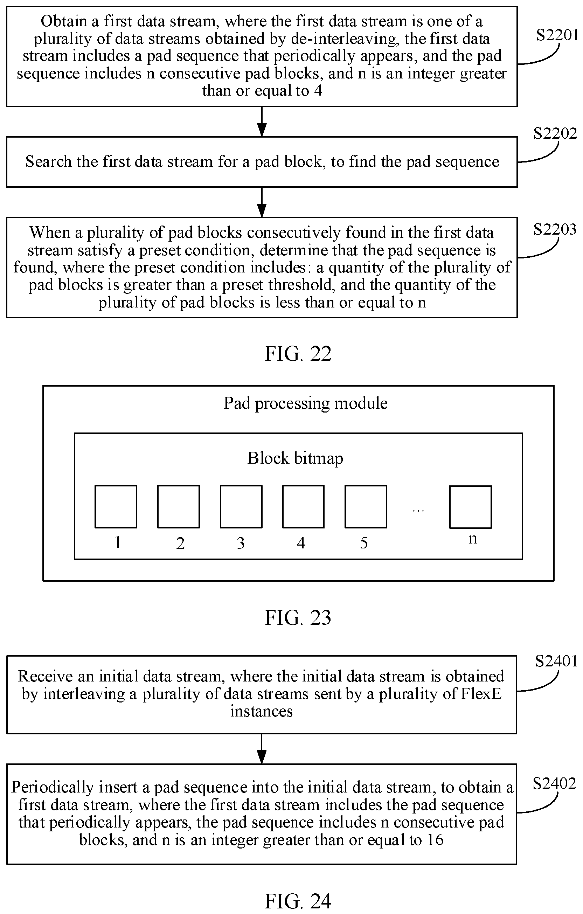

FIG. 22 is a flowchart of another data processing method according to an embodiment of this application. The data processing method is applied to FlexE. The data processing method is performed by a FlexE shim at a receiving end, and is specifically performed by a pad processing module in the FlexE shim. Optionally, the FlexE shim at the receiving end includes a plurality of pad processing modules, and the data processing method is performed by any one of the plurality of pad processing modules. For example, the data processing method shown in FIG. 22 is performed by any pad processing module in the FlexE shim at the receiving end shown in FIG. 8. Refer to FIG. 22. The data processing method includes steps S2201 to S2203.

S2201: Obtain a first data stream, where the first data stream is one of a plurality of data streams obtained by de-interleaving, the first data stream includes a pad sequence that periodically appears, the pad sequence includes n consecutive pad blocks, and n is an integer greater than or equal to 4.

Optionally, the pad processing module receives the first data stream sent by a de-interleaving module in the FlexE shim at the receiving end. The first data stream is one of the plurality of data streams obtained by performing de-interleaving on one data stream by the de-interleaving module. For example, the first data stream is any one of the plurality of data streams. It should be noted that the first data stream in the embodiment shown in FIG. 22 and the first data stream in the embodiment shown in FIG. 10 are a same data stream, but compared with the first data stream in the embodiment shown in FIG. 10, a bit error may exist in the first data stream in the embodiment shown in FIG. 22. For descriptions of the first data stream, refer to the embodiment shown in FIG. 10. Details are not described herein again.

Optionally, in the FlexE shim at the receiving end, the de-interleaving module is connected to a plurality of pad processing modules. The de-interleaving module receives one data stream sent by a physical layer at the receiving end. The de-interleaving module de-interleaves the data stream, to obtain the plurality of data streams. The de-interleaving module sends the plurality of data streams to the plurality of pad processing modules in one-to-one correspondence. A data stream received by one of the plurality of pad processing modules from the de-interleaving module is the first data stream. The data stream sent by the physical layer at the receiving end to the de-interleaving module is a data stream obtained after the physical layer performs physical layer-related processing (for example, deleting an AM block) on a data stream received by a PHY interface at the receiving end.

S2202: Search the first data stream for a pad block, to find the pad sequence.

In this embodiment of this application, the first data stream includes the pad sequence that periodically appears, and the pad sequence includes the n consecutive pad blocks. Optionally, the n pad blocks include x globally unique first pad blocks. At the receiving end, the pad processing module first searches the first data stream for the first pad block. After the pad processing module finds the first pad block in the first data stream, the pad processing module locks the found first pad block. The pad processing module searches the first data stream for the pad sequence based on the first pad block found in the first data stream.

In an embodiment, the pad processing module determines n-1 blocks after the 1^{st} first pad block found in the first data stream. The n-1 blocks are consecutive, and the n-1 blocks are consecutive to the 1^{st} first pad block. The pad processing module detects the n-1 blocks, to find a pad block in the n-1 blocks. That the pad processing module detects the n-1 blocks means that the pad processing module detects whether each of the n-1 blocks is a pad block. In other words, the pad processing module detects correctness of each of the n-1 blocks (that is, detects whether each block is a correct pad block). For a block that includes a block identifier in the n-1 blocks, the pad processing module detects, based on the block identifier in the block, whether the block is a pad block. In addition, when the block further includes a check identifier, the pad processing module checks correctness of the block identifier in the block based on the check identifier in the block.

In an optional embodiment, after the pad processing module finds the 1^{st} first pad block in the first data stream, the pad processing module obtains the 1^{st} first pad block and the n-1 blocks after the 1^{st} first pad block, and the pad processing module maps (or sets) the 1^{st} first pad block and the n-1 blocks to a block bitmap. The pad processing module detects the n-1 blocks based on the block bitmap, to find a pad block in the n-1 blocks. The block bitmap may be located in the pad processing module. For example, FIG. 23 is a diagram of the block bitmap in the pad processing module. The block bitmap includes n block positions. The pad processing module maps each of the 1^{st} first pad block and the n-1 blocks to one block position, and the pad processing module maps different blocks to different block positions. In an example, the n block positions are sequentially arranged. The pad processing module maps the 1^{st} first pad block to the 1^{st} block position (for example, a block position identified as 1 in FIG. 23) in the n block positions. The pad processing module maps the n-1 blocks to remaining n-1 block positions (that is, the 2^{nd} to n^{th} block positions) in one-to-one correspondence based on an arrangement order of the n-1 blocks.

In an optional embodiment, the n pad blocks include x first pad blocks, y second pad blocks, and z third pad blocks, and the third pad block includes at least one block identifier. After the pad processing module obtains the 1^{st} first pad block found in the first data stream and the n-1 blocks after the 1^{st} first pad block, for each of the n-1 blocks, the pad processing module detects whether the block includes a block identifier. When the block includes a block identifier, the pad processing module maps the block to the block bitmap based on the block identifier. After the pad processing module maps all blocks including block identifiers in the n-1 blocks to the block bitmap, the pad processing module randomly maps the 1^{st} first pad block and a block that is in the n-1 blocks and that does not include a block identifier to remaining positions in the block bitmap.

In an optional embodiment, the third pad block further includes at least one check identifier. That is, the third pad block includes the at least one block identifier and the at least one check identifier. After the pad processing module obtains the 1^{st} first pad block found in the first data stream and the n-1 blocks after the 1^{st} first pad block, for a block that is in the n-1 blocks and that includes a block identifier, the pad processing module further detects whether the block includes a check identifier. When the block includes a check identifier, the pad processing module checks correctness of the block identifier in the block based on the check identifier. After check succeeds, the pad processing module maps the block to the block bitmap based on the block identifier in the block. Optionally, when the pad processing module successfully checks the block identifier in the block, the pad processing module determines the block as a third pad block. That is, the pad processing module identifies the third pad block. In other words, the pad processing module finds the third pad block. For each block that is mapped to the block bitmap and that does not include a block identifier, the pad processing module detects, based on 66 bits of the block, whether the block is a pad block. Optionally, when the pad processing module determines that a quantity of bits that are in the 66 bits and that match a pad block exceeds a target quantity, the pad processing module determines the block as a pad block. That is, the pad processing module successfully detects the block, and the pad processing module finds the pad block. When the quantity of bits that are in the 66 bits and that match the pad block does not exceed the target quantity, the pad processing module determines that the block is not a pad block. That is, the pad processing module fails to detect the block.

In an embodiment, the check identifier included in the third pad block is a CRC code, and the CRC code is obtained by performing CRC calculation on the block identifier in the third pad block. For example, the third pad block is shown in FIG. 11. For each block that is in the n-1 blocks after the 1^{st} first pad block found in the first data stream and that includes a block identifier, the pad processing module detects whether the block includes a CRC code. When the block includes a CRC code, the pad processing module checks correctness of the block identifier in the block based on the CRC code. Specifically, the pad processing module obtains the block identifier and the CRC code in the block, and the pad processing module performs CRC calculation on the block identifier in the block to obtain a CRC calculation result. The pad processing module determines whether the CRC calculation result matches the CRC code (for example, whether the CRC calculation result and the CRC code are the same, or whether a quantity of same bits reaches a specific number). When the CRC calculation result matches the CRC code, the pad processing module determines that check on the block identifier succeeds, and the pad processing module determines that the block identifier is correct. When the CRC calculation result does not match the CRC code, the pad processing module determines that check on the block identifier fails, and the pad processing module determines that the block identifier is incorrect.

In another embodiment, the check identifier included in the third pad block is a bit-reversed code of the block identifier included in the third pad block. For example, the third pad block is shown in FIG. 13 or FIG. 14. For each block that is in the n-1 blocks after the 1^{st} first pad block found in the first data stream and that includes a block identifier, the pad processing module detects whether the block includes a check identifier. When the block includes a check identifier, the pad processing module checks correctness of the block identifier in the block based on the check identifier. Specifically, the pad processing module performs bit reversal on the block identifier in the block to obtain a bit-reversed code of the block identifier. The pad processing module determines whether the bit-reversed code of the block identifier matches the check identifier (for example, whether the bit-reversed code and the check identifier are the same, or whether a quantity of same bits reaches a specific number). When the bit-reversed code of the block identifier matches the check identifier, the pad processing module determines that check on the block identifier succeeds, and the pad processing module determines that the block identifier is correct. When the bit-reversed code of the block identifier does not match the check identifier, the pad processing module determines that check on the block identifier fails, and the pad processing module determines that the block identifier is incorrect.

In an optional embodiment, for each block that is in the n-1 blocks and that includes a block identifier and a check identifier, the pad processing module detects correctness of the check identifier in the block. When determining that the check identifier in the block is correct, the pad processing module checks correctness of the block identifier in the block based on the check identifier in the block. In an embodiment, the block includes a plurality of block identifiers and a plurality of check identifiers, and a quantity of the plurality of block identifiers is equal to or unequal to a quantity of the plurality of check identifiers. For example, the quantity of the plurality of block identifiers and the quantity of the plurality of check identifiers are odd numbers. The pad processing module detects correctness of the plurality of check identifiers, and the pad processing module checks correctness of the plurality of block identifiers based on a correct check identifier in the plurality of check identifiers. In another embodiment, the block includes a plurality of block identifiers and a plurality of check identifiers, and the plurality of block identifiers are in one-to-one correspondence with the plurality of check identifiers. The pad processing module detects correctness of the plurality of check identifiers, and the pad processing module checks correctness of a corresponding block identifier in the plurality of block identifiers based on a correct check identifier in the plurality of check identifiers.

In an optional embodiment, for each block that is in the n-1 blocks and that includes a plurality of block identifiers and a plurality of check identifiers, a quantity of the plurality of block identifiers is equal to or unequal to a quantity of the plurality of check identifiers. For example, a sum of the quantity of the plurality of block identifiers and the quantity of the plurality of check identifiers is an odd number. The pad processing module detects correctness of the plurality of block identifiers and the plurality of check identifiers. The pad processing module determines, based on a detection result, a sum of a quantity of correct block identifiers in the plurality of block identifiers and a quantity of correct check identifiers in the plurality of check identifiers. When the sum of the quantity of correct block identifiers in the plurality of block identifiers and the quantity of correct check identifiers in the plurality of check identifiers exceeds a half of the sum of the quantity of the plurality of block identifiers and the quantity of the plurality of check identifiers, the pad processing module determines that the block is a third pad block. When the sum of the quantity of correct block identifiers in the plurality of block identifiers and the quantity of correct check identifiers in the plurality of check identifiers does not exceed the half of the sum of the quantity of the plurality of block identifiers and the quantity of the plurality of check identifiers, the pad processing module determines that the block is not a third pad block. Optionally, when the sum of the quantity of the plurality of block identifiers and the quantity of the plurality of check identifiers is an odd number, the half of the sum of the quantity of the plurality of block identifiers and the quantity of the plurality of check identifiers is not an integer, and the pad processing module may round up the half of the sum of the quantity of the plurality of block identifiers and the quantity of the plurality of check identifiers for identification and determining. This is not limited in this embodiment of this application.

In the foregoing embodiment, an example in which the pad processing module identifies (or searches for) the third pad block jointly based on the block identifier and the check identifier is used for description. When the third pad block includes a plurality of block identifiers, the pad processing module may identify (or search for) the third pad block based on the plurality of block identifiers. In an embodiment, for each block that includes a plurality of block identifiers in the n-1 blocks after the 1^{st} first pad block found in the first data stream, the pad processing module detects correctness of the plurality of block identifiers. The pad processing module determines a quantity of correct block identifiers in the plurality of block identifiers. When the quantity of correct block identifiers in the plurality of block identifiers exceeds a half of the quantity of the plurality of block identifiers, the pad processing module determines that the block is a third pad block. When the quantity of correct block identifiers in the plurality of block identifiers does not exceed the half of the quantity of the plurality of block identifiers, the pad processing module determines that the block is not a third pad block. Optionally, when the quantity of the plurality of block identifiers is an odd number, the half of the quantity of the plurality of block identifiers is not an integer, and the pad processing module may round up the half of the quantity of the plurality of block identifiers for identification and determining. This is not limited in this embodiment of this application.

It can be learned from the foregoing descriptions that in this embodiment of this application, the third pad block is set to include the plurality of block identifiers and/or the plurality of check identifiers. When a bit error exists in some identifiers of the plurality of block identifiers and/or the plurality of check identifiers, the pad processing module in the FlexE shim at the receiving end can still identify the third pad block. This can avoid a case in which the pad processing module in the FlexE shim at the receiving end cannot identify the third pad block because a bit error occurs in a block identifier and/or a check identifier in the third pad block. This improves fault tolerance of searching for the third pad block by the pad processing module. In addition, the pad processing module in the FlexE shim at the receiving end may identify the third pad block only by identifying the block identifier and/or the check identifier in the third pad block, and may not need to identify complete content of the third pad block. In other words, the pad processing module can identify the third pad block simply by detecting correctness of the block identifier and/or the check identifier in the third pad block. Therefore, a process of searching for the third pad block by the pad processing module can be simplified. In this embodiment of this application, the third pad block is set to include the block identifier, so that a dependency relationship between pad blocks is reduced. Even if some pad blocks are incorrect, searching for the pad sequence in the first data stream by the pad processing module is not affected.

S2203: When a plurality of pad blocks consecutively found in the first data stream satisfy a preset condition, determine that the pad sequence is found, where the preset condition includes: a quantity of the plurality of pad blocks is greater than a preset threshold, and the quantity of the plurality of pad blocks is less than or equal to n.

In a process of searching the first data stream for a pad block by the pad processing module in the FlexE shim at the receiving end, the pad processing module determines whether the quantity of the plurality of pad blocks consecutively found in the first data stream is greater than the preset threshold and less than or equal to n. When the pad processing module determines that the quantity of the plurality of continuously found pad blocks is greater than the preset threshold and is less than or equal to n, the pad processing module determines that the plurality of pad blocks satisfy the preset condition, and then the pad processing module determines that the pad sequence is found. When the pad processing module determines that the quantity of the plurality of pad blocks is not greater than the preset threshold, the pad processing module determines that the plurality of pad blocks do not satisfy the preset condition, and the pad processing module continues to search the first data stream for a pad block until the plurality of pad blocks that are consecutively found satisfy the preset condition. Optionally, the plurality of pad blocks consecutively found by the pad processing module in the first data stream include the 1^{st} first pad block consecutively found by the pad processing module in the first data stream and a pad block found by the pad processing module in n-1 blocks after the 1^{st} first pad block.

In an optional embodiment, the pad processing module performs at least one search process on the first data stream, to find the pad sequence in the first data stream. In each search process, the pad processing module searches the first data stream for the first pad block. After the pad processing module finds the 1^{st} first pad block in the first data stream, the pad processing module searches for a pad block in the n-1 blocks after the 1^{st} first pad block. In addition, the pad processing module determines whether a quantity of pad blocks found in the n blocks (including the 1^{st} first pad block and the n-1 blocks) is greater than the preset threshold. When the pad processing module determines that the quantity of pad blocks found in the n blocks is greater than the preset threshold, the pad processing module determines that the plurality of consecutively found pad blocks satisfy the preset condition, and then the pad processing module determines that the pad sequence is found. The pad processing module determines that the current search process succeeds, and the pad processing module ends the search process. When the pad processing module determines that the quantity of pad blocks found in the n blocks is not greater than the preset threshold, the pad processing module determines that the plurality of consecutively found pad blocks does not satisfy the preset condition, the pad processing module determines that the current search process fails, and the pad processing module performs a next search process. Optionally, in the 1^{st} search process, the pad processing module searches for the first pad block starting from a start position of the first data stream. In each subsequent search process, the pad processing module starts to search for the first pad block at an end position of a previous search process (specifically, a next block of n blocks detected in the previous search process). This is not limited in this embodiment of this application.

It should be noted that the preset threshold may be flexibly set based on a situation. A specific value of the preset threshold is not limited in this embodiment of this application. In this embodiment of this application, an example in which the preset condition for searching for the pad sequence includes: the quantity of the plurality of pad blocks consecutively found in the first data stream is greater than the preset threshold and less than or equal to n is used for description. In some embodiments, the preset condition for searching for the pad sequence includes: the quantity of the plurality of pad blocks consecutively found in the first data stream is greater than or equal to the preset threshold and less than or equal to n. How to specifically set the preset condition may be related to the preset threshold. In an example, when n is 8 and the preset threshold is 6, the preset condition may be that the quantity of the plurality of pad blocks consecutively found in the first data stream is greater than the preset threshold and is less than or equal to n. When n is 8 and the preset threshold is 7, the preset condition may be that the quantity of a plurality of pad blocks consecutively found in the first data stream is greater than or equal to the preset threshold and is less than or equal to n. In another example, when n is 16 and the preset threshold is 13, the preset condition may be that the quantity of the plurality of pad blocks consecutively found in the first data stream is greater than the preset threshold and is less than or equal to n. When n is 16 and the preset threshold is 14, the preset condition may be that the quantity of a plurality of pad blocks consecutively found in the first data stream is greater than or equal to the preset threshold and is less than or equal to n. In still another example, when n is 32 and the preset threshold is 28, the preset condition may be that the quantity of the plurality of pad blocks consecutively found in the first data stream is greater than the preset threshold and is less than or equal to n. When n is 32 and the preset threshold is 29, the preset condition may be that the quantity of a plurality of pad blocks consecutively found in the first data stream is greater than or equal to the preset threshold and is less than or equal to n. In yet another example, when n is 64 and the preset threshold is 60, the preset condition may be that the quantity of the plurality of pad blocks consecutively found in the first data stream is greater than the preset threshold and is less than or equal to n. When n is 64 and the preset threshold is 61, the preset condition may be that the quantity of a plurality of pad blocks consecutively found in the first data stream is greater than or equal to the preset threshold and is less than or equal to n. It can be learned that whether the preset condition includes a case in which the quantity of the plurality of consecutively found pad blocks is equal to the preset threshold depends on setting of the preset threshold. A range covered by the preset condition may be flexibly set based on the preset threshold.

After finding the pad sequence in the first data stream, the pad processing module in the FlexE shim at the receiving end may delete the pad sequence in the first data stream. Optionally, the pad processing module deletes the pad sequence in the first data stream based on the 1^{st} pad sequence found in the first data stream and a periodicity in which the pad sequence appears in the first data stream. In an embodiment, there is one pad sequence after every w blocks in the first data stream. The pad processing module first deletes the 1^{st} pad sequence found in the first data stream, and then the pad processing module deletes n blocks after every w blocks (the pad processing module considers that the n blocks are n pad blocks, that is, the pad sequence).

In the embodiment shown in FIG. 22, after the pad processing module in the FlexE shim at the receiving end deletes the pad sequence in the first data stream, the pad processing module sends, to a corresponding FlexE instance, a data stream obtained by deleting the pad sequence (for example, the data stream obtained by deleting the pad sequence is the initial data stream in S1001), so that the FlexE instance processes the initial data stream. The initial data stream is sequentially processed by the FlexE instance, a slot allocation scheduler, and an idle insertion/deletion module, to restore a FlexE client data stream. The FlexE shim at the receiving end sends the FlexE client data stream to a MAC layer for processing.

In conclusion, according to the data processing method provided in this embodiment of this application, the first data stream includes the pad sequence that periodically appears, the pad sequence includes the n consecutive pad blocks, and n is an integer greater than or equal to 4. Therefore, this embodiment of this application provides a FlexE-oriented method for inserting a large quantity of pad blocks into a data stream, is applicable to a PHY interface of a higher rate such as an 800GE PHY interface or a 1.6TE PHY interface, and can adapt to evolution of an Ethernet standard. When the quantity of the plurality of pad blocks consecutively found in the first data stream is greater than the preset threshold and is less than or equal to n, the pad processing module in the FlexE shim at the receiving end determines that the pad sequence is found, and it is not required that the quantity of the plurality of pad blocks consecutively found is definitely equal to n, that is, not all pad blocks in the pad sequence need to be correctly detected. Therefore, this embodiment of this application provides a method for searching for the pad sequence by soft decision. A process of searching for the pad sequence by the pad processing module in the FlexE shim at the receiving end is relaxed, a fault tolerance capability of searching for the pad sequence is good, and a success probability of searching for the pad sequence can be maintained without degradation.

FIG. 24 is a flowchart of still another data processing method according to an embodiment of this application. The data processing method is applied to FlexE. The data processing method is performed by a FlexE shim at a transmitting end, and is specifically performed by a pad processing module in the FlexE shim. Optionally, the FlexE shim at the transmitting end includes a plurality of pad processing modules, and the data processing method is performed by any one of the plurality of pad processing modules. For example, the data processing method shown in FIG. 24 is performed by any pad processing module in the FlexE shim at the transmitting end shown in FIG. 9. Refer to FIG. 24. The data processing method includes steps S2401 and S2402.

S2401: Receive an initial data stream, where the initial data stream is obtained by interleaving a plurality of data streams sent by a plurality of FlexE instances.

In the FlexE shim at the transmitting end, an interleaving module may send a data stream to the pad processing module, and the pad processing module receives the data stream sent by the interleaving module. In this embodiment, for ease of differentiation, the data stream sent by the interleaving module to the pad processing module is referred to as an initial data stream. The initial data stream is obtained by interleaving, by the interleaving module, the plurality of data streams sent by the plurality of FlexE instances to the interleaving module.

S2402: Periodically insert a pad sequence into the initial data stream, to obtain a first data stream, where the first data stream includes the pad sequence that periodically appears, the pad sequence includes n consecutive pad blocks, and n is an integer greater than or equal to 16.

For an implementation process of S2402, refer to the implementation process of S1002. For descriptions of the first data stream in this embodiment, refer to the embodiment shown in FIG. 10. Details are not described herein again. It should be noted that, different from the embodiment shown in FIG. 10, in this embodiment, n is an integer greater than or equal to 16.

In this embodiment, after the pad processing module at the transmitting end obtains the first data stream, the pad processing module sends the first data stream to a physical layer at the transmitting end. After performing physical layer-related processing on the first data stream (for example, inserting an AM block into the first data stream), the physical layer sends a processed data stream to the receiving end through a PHY interface at the transmitting end.

In conclusion, according to the data processing method provided in this embodiment of this application, the pad processing module in the FlexE shim at the transmitting end periodically inserts the pad sequence into the initial data stream, to obtain the first data stream. The pad sequence includes the n consecutive pad blocks, and n is an integer greater than or equal to 16. It can be learned that this embodiment of this application provides a FlexE-oriented method for inserting a large quantity of pad blocks into a data stream, is applicable to a PHY interface of a higher rate such as an 800GE PHY interface or a 1.6TE PHY interface, and can adapt to evolution of an Ethernet standard.

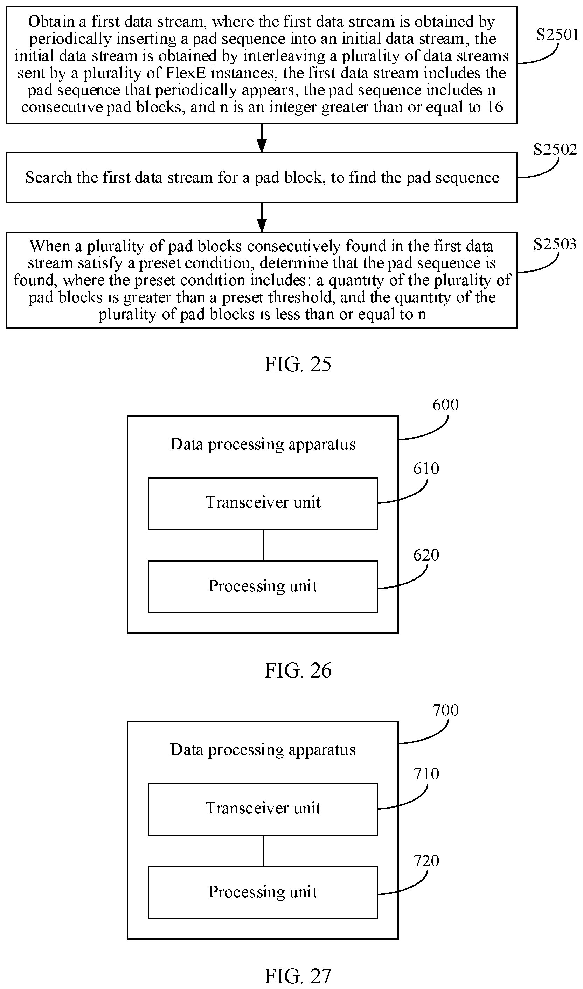

FIG. 25 is a flowchart of yet another data processing method according to an embodiment of this application. The data processing method is applied to FlexE. The data processing method is performed by a FlexE shim at a receiving end, and is specifically performed by a pad processing module in the FlexE shim. Optionally, the FlexE shim at the receiving end includes a plurality of pad processing modules, and the data processing method is performed by any one of the plurality of pad processing modules. For example, the data processing method shown in FIG. 25 is performed by any pad processing module in the FlexE shim at the receiving end shown in FIG. 9. Refer to FIG. 25. The data processing method includes steps S2501 to S2503.

S2501: Obtain a first data stream, where the first data stream is obtained by periodically inserting a pad sequence into an initial data stream, the initial data stream is obtained by interleaving a plurality of data streams sent by a plurality of FlexE instances, the first data stream includes the pad sequence that periodically appears, the pad sequence includes n consecutive pad blocks, and n is an integer greater than or equal to 16.

Optionally, in the FlexE shim at the receiving end, the pad processing module receives the first data stream sent by a physical layer. The first data stream is a data stream obtained after the physical layer performs physical layer-related processing (for example, deleting an AM block) on a data stream received by a PHY interface at the receiving end. In addition, the first data stream is a data stream obtained by periodically inserting the pad sequence into the initial data stream by the pad processing module in the FlexE shim at the transmitting end, and the initial data stream is obtained by interleaving, by an interleaving module in the FlexE shim at the transmitting end, the plurality of data streams sent by the plurality of FlexE instances in the FlexE shim. It should be noted that the first data stream in the embodiment shown in FIG. 25 and the first data stream in the embodiment shown in FIG. 24 are a same data stream, but compared with the first data stream in the embodiment shown in FIG. 24, a bit error may exist in the first data stream in the embodiment shown in FIG. 25. For descriptions of the first data stream in the embodiment shown in FIG. 25, refer to the embodiment shown in FIG. 10. Details are not described herein again. Different from the embodiment shown in FIG. 10, in the embodiment shown in FIG. 25, n is an integer greater than or equal to 16.

S2502: Search the first data stream for a pad block, to find the pad sequence.

S2503: When a plurality of pad blocks consecutively found in the first data stream satisfy a preset condition, determine that the pad sequence is found, where the preset condition includes: a quantity of the plurality of pad blocks is greater than a preset threshold, and the quantity of the plurality of pad blocks is less than or equal to n.

For an implementation process of S2502 and S2503, refer to the implementation process of S2202 and S2203. Details are not described herein again.

It should be noted that a value of the preset threshold in S2503 is different from a value of the preset threshold in S2203, and the preset threshold in S2503 is usually greater than the preset threshold in S2203. Similar to S2203, the preset threshold in S2503 may be flexibly set based on a situation. A specific value of the preset threshold is not limited in this embodiment of this application. In addition, in this embodiment of this application, an example in which the preset condition for searching for the pad sequence includes: the quantity of the plurality of pad blocks consecutively found in the first data stream is greater than the preset threshold and less than or equal to n is used for description. In some embodiments, the preset condition for searching for the pad sequence includes: the quantity of the plurality of pad blocks consecutively found in the first data stream is greater than or equal to the preset threshold and less than or equal to n. How to specifically set the preset condition may be related to the preset threshold. In an example, when n is 16 and the preset threshold is 13, the preset condition may be that the quantity of the plurality of pad blocks consecutively found in the first data stream is greater than the preset threshold and is less than or equal to n. When n is 16 and the preset threshold is 14, the preset condition may be that the quantity of a plurality of pad blocks consecutively found in the first data stream is greater than or equal to the preset threshold and is less than or equal to n. In another example, when n is 32 and the preset threshold is 28, the preset condition may be that the quantity of the plurality of pad blocks consecutively found in the first data stream is greater than the preset threshold and is less than or equal to n. When n is 32 and the preset threshold is 29, the preset condition may be that the quantity of a plurality of pad blocks consecutively found in the first data stream is greater than or equal to the preset threshold and is less than or equal to n. In still another example, when n is 64 and the preset threshold is 60, the preset condition may be that the quantity of the plurality of pad blocks consecutively found in the first data stream is greater than the preset threshold and is less than or equal to n. When n is 64 and the preset threshold is 61, the preset condition may be that the quantity of a plurality of pad blocks consecutively found in the first data stream is greater than or equal to the preset threshold and is less than or equal to n. In yet another example, when n is 128 and the preset threshold is 120, the preset condition may be that the quantity of the plurality of pad blocks consecutively found in the first data stream is greater than the preset threshold and is less than or equal to n. When n is 128 and the preset threshold is 121, the preset condition may be that the quantity of a plurality of pad blocks consecutively found in the first data stream is greater than or equal to the preset threshold and is less than or equal to n. It can be learned that whether the preset condition includes a case in which the quantity of the plurality of consecutively found pad blocks is equal to the preset threshold depends on setting of the preset threshold. A range covered by the preset condition may be flexibly set based on the preset threshold.

In this embodiment, after the pad processing module in the FlexE shim at the receiving end finds the pad sequence in the first data stream, the pad processing module deletes the pad sequence in the first data stream. The pad processing module sends, to a corresponding de-interleaving module at the receiving end, a data stream obtained by deleting the pad sequence (for example, the data stream obtained by deleting the pad sequence is the initial data stream in S2201). The de-interleaving module de-interleaves the initial data stream to obtain a plurality of data streams. The de-interleaving module sends the plurality of data streams to a plurality of FlexE instances at the receiving end in one-to-one correspondence, so that the plurality of FlexE instances process the plurality of data streams. The initial data stream is sequentially processed by the de-interleaving module, the FlexE instance, a slot allocation scheduler, and an idle insertion/deletion module, to restore a FlexE client data stream. The FlexE shim at the receiving end sends the FlexE client data stream to a MAC layer for processing.

In conclusion, according to the data processing method provided in this embodiment of this application, the first data stream includes the pad sequence that periodically appears, the pad sequence includes the n consecutive pad blocks, and n is an integer greater than or equal to 16. Therefore, this embodiment of this application provides a FlexE-oriented method for inserting a large quantity of pad blocks into a data stream, is applicable to a PHY interface of a higher rate such as an 800GE PHY interface or a 1.6TE PHY interface, and can adapt to evolution of an Ethernet standard. When the quantity of the plurality of pad blocks consecutively found in the first data stream is greater than the preset threshold and is less than or equal to n, the pad processing module in the FlexE shim at the receiving end determines that the pad sequence is found, and it is not required that the quantity of the plurality of pad blocks consecutively found is definitely equal to n, that is, not all pad blocks in the pad sequence need to be correctly detected. Therefore, this embodiment of this application provides a method for searching for the pad sequence by soft decision. A process of searching for the pad sequence by the pad processing module in the FlexE shim at the receiving end is relaxed, a fault tolerance capability of searching for the pad sequence is good, and a success probability of searching for the pad sequence can be maintained without degradation.

The foregoing describes the method embodiments of this application, and the following describes apparatus embodiments of this application. An apparatus in this application may be configured to perform the method in this application. For details that are not disclosed in the apparatus embodiments of this application, refer to the method embodiments.

FIG. 26 is a diagram of a data processing apparatus 600 according to an embodiment of this application. The data processing apparatus 600 is applied to FlexE. For example, the data processing apparatus 600 is a FlexE shim at a transmitting end, and may be specifically a pad processing module in the FlexE shim. The data processing apparatus 600 is configured to perform the methods provided in the embodiments shown in FIG. 10 and FIG. 24. As shown in FIG. 26, the data processing apparatus 600 includes a transceiver unit 610 and a processing unit 620. The transceiver unit 610 is configured to perform receiving and sending operations in the method embodiments shown in FIG. 10 and FIG. 24, and the processing unit 620 is configured to perform operations other than the receiving and sending operations in the method embodiments shown in FIG. 10 and FIG. 24.

In an implementation, the transceiver unit 610 is configured to receive an initial data stream sent by a FlexE instance. The processing unit 620 is configured to periodically insert a pad sequence into the initial data stream, to obtain a first data stream, where the first data stream includes the pad sequence that periodically appears, the pad sequence includes n consecutive pad blocks, and n is an integer greater than or equal to 4.

In another implementation, the transceiver unit 610 is configured to receive an initial data stream, where the initial data stream is obtained by interleaving a plurality of data streams sent by a plurality of FlexE instances. The processing unit 620 is configured to periodically insert a pad sequence into the initial data stream, to obtain a first data stream, where the first data stream includes the pad sequence that periodically appears, the pad sequence includes n consecutive pad blocks, and n is an integer greater than or equal to 16.

Optionally, in the foregoing two implementations, the n pad blocks include x first pad blocks and y second pad blocks, the first pad block is a control block that is globally unique in the first data stream, the second pad block is an error Error block, x is a positive integer, and y is a positive integer.

Optionally, in the foregoing two implementations, the x first pad blocks and the y second pad blocks satisfy any one of the following:
x=1, y=n-1, the y second pad blocks are located after the first pad block, and the y second pad blocks are consecutive to the first pad block;
n is an even number, x=y=n/2, the y second pad blocks are located after the x first pad blocks, and the y second pad blocks are consecutive to the x first pad blocks;
n is an even number, x=y=n/2, the pad sequence includes n/2 block groups, each block group includes one first pad block and one second pad block, the second pad block is located after the first pad block and is consecutive to the first pad block in each block group, and pad blocks in the n/2 block groups are consecutive; or
the x first pad blocks include x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x1 and x2 are both positive integers.

Optionally, in the foregoing two implementations, the n pad blocks further include z third pad blocks, and z is a positive integer. The y second pad blocks are located after the x first pad blocks and before the z third pad blocks, and the x first pad blocks, the y second pad blocks, and the z third pad blocks are consecutive; or the z third pad blocks are located after the x first pad blocks and before the y second pad blocks, and the x first pad blocks, the z third pad blocks, and the y second pad blocks are consecutive.

Optionally, in the foregoing two implementations, the third pad block is a data block.

Optionally, in the foregoing two implementations, the third pad block includes at least one block identifier.

Optionally, in the foregoing two implementations, the third pad block further includes at least one check identifier, and the at least one check identifier is used to check correctness of the at least one block identifier.

Optionally, in the foregoing two implementations, a quantity of the at least one block identifier is equal to a quantity of the at least one check identifier; or a sum of the quantity of the at least one block identifier and the quantity of the at least one check identifier is an odd number.

In conclusion, in the technical solution provided in this embodiment of this application, the pad sequence periodically inserted by the data processing apparatus (that is, the FlexE shim at the transmitting end) into the initial data stream includes the n consecutive pad blocks, where n is an integer greater than or equal to 4, or n is an integer greater than or equal to 16. It can be learned that, in this embodiment of this application, a large quantity of pad blocks may be inserted into a data stream for FlexE. This embodiment is applicable to a PHY interface of a higher rate such as an 800GE PHY interface or a 1.6TE PHY interface, and can adapt to evolution of an Ethernet standard.

FIG. 27 is a diagram of another data processing apparatus 700 according to an embodiment of this application. The data processing apparatus 700 is applied to FlexE. For example, the data processing apparatus 700 is a FlexE shim at a receiving end, and may be specifically a pad processing module in the FlexE shim. The data processing apparatus 700 is configured to perform the methods provided in the embodiments shown in FIG. 22 and FIG. 25. As shown in FIG. 27, the data processing apparatus 700 includes a transceiver unit 710 and a processing unit 720. The transceiver unit 710 is configured to perform receiving and sending operations in the method embodiments shown in FIG. 22 and FIG. 25, and the processing unit 720 is configured to perform operations other than the receiving and sending operations in the method embodiments shown in FIG. 22 and FIG. 25.

In an implementation, the transceiver unit 710 is configured to obtain a first data stream, where the first data stream is one of a plurality of data streams obtained by de-interleaving, the first data stream includes a pad sequence that periodically appears, the pad sequence includes n consecutive pad blocks, and n is an integer greater than or equal to 4. The processing unit 720 is configured to: search the first data stream for a pad block, to find the pad sequence; and when a plurality of pad blocks consecutively found in the first data stream satisfy a preset condition, determine that the pad sequence is found, where the preset condition includes: a quantity of the plurality of pad blocks is greater than a preset threshold, and the quantity of the plurality of pad blocks is less than or equal to n.

In another implementation, the transceiver unit 710 is configured to obtain a first data stream, where the first data stream is obtained by periodically inserting a pad sequence into an initial data stream, the initial data stream is obtained by interleaving a plurality of data streams sent by a plurality of FlexE instances, the first data stream includes the pad sequence that periodically appears, the pad sequence includes n consecutive pad blocks, and n is an integer greater than or equal to 16. The processing unit 720 is configured to: search the first data stream for a pad block, to find the pad sequence; and when a plurality of pad blocks consecutively found in the first data stream satisfy a preset condition, determine that the pad sequence is found, where the preset condition includes: a quantity of the plurality of pad blocks is greater than a preset threshold, and the quantity of the plurality of pad blocks is less than or equal to n.

Optionally, in the foregoing two implementations, the n pad blocks include x first pad blocks and y second pad blocks, the first pad block is a control block that is globally unique in the first data stream, the second pad block is an error block, x is a positive integer, and y is a positive integer.

Optionally, in the foregoing two implementations, the x first pad blocks and the y second pad blocks satisfy any one of the following:
x=1, y=n-1, the y second pad blocks are located after the first pad block, and the y second pad blocks are consecutive to the first pad block;
n is an even number, x=y=n/2, the y second pad blocks are located after the x first pad blocks, and the y second pad blocks are consecutive to the x first pad blocks;
n is an even number, x=y=n/2, the pad sequence includes n/2 block groups, each block group includes one first pad block and one second pad block, the second pad block is located after the first pad block and is consecutive to the first pad block in each block group, and pad blocks in the n/2 block groups are consecutive; or
the x first pad blocks include x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x1 and x2 are both positive integers.

Optionally, in the foregoing two implementations, the n pad blocks further include z third pad blocks, and z is a positive integer. The y second pad blocks are located after the x first pad blocks and before the z third pad blocks, and the x first pad blocks, the y second pad blocks, and the z third pad blocks are consecutive; or the z third pad blocks are located after the x first pad blocks and before the y second pad blocks, and the x first pad blocks, the z third pad blocks, and the y second pad blocks are consecutive.

Optionally, in the foregoing two implementations, the third pad block is a data block.

Optionally, in the foregoing two implementations, the third pad block includes at least one block identifier.

Optionally, in the foregoing two implementations, the third pad block further includes at least one check identifier, and the at least one check identifier is used to check correctness of the at least one block identifier.

Optionally, in the foregoing two implementations, a quantity of the at least one block identifier is equal to a quantity of the at least one check identifier; or a sum of the quantity of the at least one block identifier and the quantity of the at least one check identifier is an odd number.

Optionally, in the foregoing two implementations, the n pad blocks include the x first pad blocks, the first pad block is a control block that is globally unique in the first data stream, and x is a positive integer. The processing unit 720 is configured to: search the first data stream for the first pad block; and search the first data stream for the pad sequence based on the first pad block found in the first data stream.

Optionally, in the foregoing two implementations, the processing unit 720 is configured to: determine n-1 blocks after the 1^{st} first pad block found in the first data stream, where the n-1 blocks are consecutive, and the n-1 blocks are consecutive to the 1^{st} first pad block; and detect the n-1 blocks, to find a pad block in the n-1 blocks.

Optionally, in the foregoing two implementations, the processing unit 720 is configured to: map the 1^{st} first pad block and the n-1 blocks to a block bitmap; and detect the n-1 blocks based on the block bitmap, to find the pad block in the n-1 blocks.

Optionally, in the foregoing two implementations, the n pad blocks include a third pad block, and the third pad block includes at least one block identifier. The processing unit 720 is configured to map the third pad block to the block bitmap based on the block identifier in the third pad block.

Optionally, in the foregoing two implementations, the third pad block further includes at least one check identifier, and the processing unit 720 is configured to: check correctness of the at least one block identifier based on the at least one check identifier; and map the third pad block to the block bitmap based on a correct block identifier in the at least one block identifier.

In conclusion, in the technical solution provided in this embodiment of this application, the first data stream includes the pad sequence that periodically appears, the pad sequence includes n consecutive pad blocks, and n is an integer greater than or equal to 4, or n is an integer greater than or equal to 16. Therefore, a large quantity of pad blocks may be inserted into a data stream for FlexE in this application. This application is applicable to a PHY interface of a higher rate such as an 800GE PHY interface or a 1.6TE PHY interface, and can adapt to evolution of an Ethernet standard. When the quantity of the plurality of pad blocks consecutively found in the first data stream is greater than the preset threshold and is less than or equal to n, the data processing apparatus (that is, the FlexE shim at the receiving end) determines that the pad sequence is found, and it is not required that the quantity of the plurality of pad blocks consecutively found is definitely equal to n, that is, not all pad blocks in the pad sequence need to be correctly detected. Therefore, a process of searching for the pad sequence is relaxed, a fault tolerance capability of searching for the pad sequence is good, and a success probability of searching for the pad sequence can be maintained without degradation.

The data processing apparatus provided in this embodiment of this application may alternatively be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), generic array logic (generic array logic, GAL), or any combination thereof. Alternatively, the data processing method provided in the foregoing method embodiments may be implemented by using software. When the data processing method provided in the foregoing method embodiments is implemented by using software, each module in the data processing apparatus may alternatively be a software module.

An embodiment of this application provides a data processing apparatus. The data processing apparatus is applied to FlexE. The data processing apparatus may be the transmitting end or a function component in the transmitting end, or the data processing apparatus may be the receiving end or a function component in the receiving end. The data processing apparatus includes a memory and a processor. The memory is configured to store a computer program. The processor is configured to execute the computer program stored in the memory, so that the data processing apparatus performs all or a part of the steps of the data processing method provided in the foregoing method embodiments.

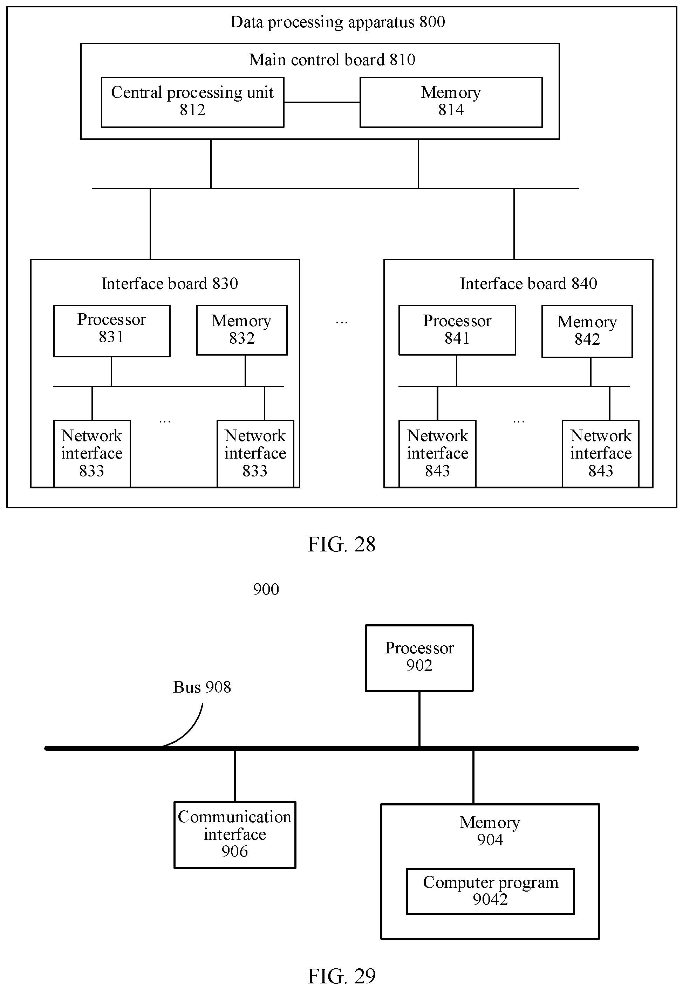

In an embodiment, FIG. 28 is a diagram of still another data processing apparatus 800 according to an embodiment of this application. The data processing apparatus 800 may be the transmitting end or a function component in the transmitting end, or the data processing apparatus 800 may be the receiving end or a function component in the receiving end. The data processing apparatus 800 may implement the method embodiment shown in FIG. 10, FIG. 22, FIG. 24, or FIG. 25. The data processing apparatus 800 includes a main control board 810, an interface board 830, and an interface board 840. In a case of a plurality of interface boards, a switch fabric unit (not shown in FIG. 28) is further included. The switch fabric unit is configured to complete data exchange between the interface boards (where the interface board is also referred to as a line card or a service board).

The main control board 810 is configured to complete functions such as system management, device maintenance, and protocol processing. The interface board 830 and the interface board 840 are configured to provide service interfaces and implement service forwarding. These service interfaces are, for example, a POS interface, a GE PHY interface, a TE PHY interface, and an asynchronous transfer mode (asynchronous transfer mode, ATM) interface. The main control board 810 mainly includes three types of functional units: a system management and control unit, a system clock unit, and a system maintenance unit. The main control board 810, the interface board 830, and the interface board 840 are connected to a system backboard through a system bus to implement interworking. The interface board 830 includes one or more processors 831. The processor 831 is configured to: control and manage the interface board 830, and communicate with a central processing unit 812 on the main control board 810. The memory 832 on the interface board 830 is configured to store a forwarding entry. The interface board 830 includes one or more network interfaces 833 configured to implement receiving and sending. The main control board 810 further includes a memory 814. The memory 814 is configured to store system management information, a protocol, and the like. This is not limited in this embodiment of this application.

As shown in FIG. 28, this embodiment includes a plurality of interface boards and uses a distributed forwarding mechanism. In this mechanism, an operation on the interface board 840 is basically similar to an operation on the interface board 830. For example, the interface board 840 includes one or more network interfaces 843 to implement receiving and sending, the interface board 840 includes a memory 842 to store a forwarding entry, and the interface board 840 includes a processor 841 to control and manage the interface board 840 and communicate with the central processing unit 812 on the main control board 810.

The processor 831 in the interface board 830 and/or the processor 841 in the interface board 840 in FIG. 28 may be dedicated hardware or a chip, for example, a network processor or an application-specific integrated circuit, to implement the foregoing functions. This implementation is usually referred to as a manner of using dedicated hardware or a chip for processing on a forwarding plane. In another implementation, the processor 831 in the interface board 830 and/or the processor 841 in the interface board 840 may alternatively use a general-purpose processor, for example, a general-purpose central processing unit (central processing unit, CPU).

There may be one or more main control boards. When there are a plurality of main control boards, the main control boards may include an active main control board and a standby main control board. There may be one or more interface boards. A device (for example, a transmitting end or a receiving end) with a stronger data processing capability provides more interface boards. In a case of a plurality of interface boards, the plurality of interface boards may communicate with each other through one or more switch fabric units, and load sharing and redundancy backup may be jointly implemented by the plurality of interface boards. In a centralized forwarding architecture, the device may not need a switch fabric unit, and the interface board provides a function of processing service data of an entire system. In a distributed forwarding architecture, the device includes a plurality of interface boards, and may implement data exchange between the plurality of interface boards through the switch fabric unit, to provide a large-capacity data exchange and processing capability. Therefore, a data access and processing capability of the device in the distributed architecture is better than that of a device in the centralized architecture. A specific architecture to be used depends on a networking deployment scenario, and is not limited herein.

In an optional implementation, the memory 832 and/or the memory 842 are/is a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile optical disc, a Blu-ray disc, and the like), a magnetic disk or another magnetic storage device, or any other medium that can be used to carry or store expected program code in a form of instructions or a data structure and that can be accessed by a computer. However, the memory is not limited thereto. The memory 832 may exist independently, and is connected to the processor 831 through a communication bus, or may be integrated with the processor 831. The memory 842 may exist independently, and is connected to the processor 841 through a communication bus, or may be integrated with the processor 841.

The memory 832 is configured to store program code (that is, a computer program), and the processor 831 controls execution of the program code, to perform a part or all of the steps of the data processing method provided in the foregoing embodiments. The processor 831 is configured to execute the program code stored in the memory 832. The program code may include one or more software units. The one or more software units may be functional units provided in the embodiment shown in FIG. 26 or FIG. 27. The memory 842 may also be configured to store program code, and the processor 841 controls execution of the program code, to perform a part or all of the steps of the data processing method provided in the foregoing embodiments. Similarly, the memory 814 may also be configured to store program code, and the central processing unit 812 controls execution of the program code, to perform a part or all of the steps of the data processing method provided in the foregoing embodiments.

Optionally, the network interfaces 833 and 843 are apparatuses that use a transceiver, and are configured to communicate with another device or network, for example, the Ethernet, a radio access network (radio access network, RAN), or a wireless local area network (wireless local area network, WLAN).

In another embodiment, FIG. 29 is a diagram of still another data processing apparatus 900 according to an embodiment of this application. The data processing apparatus 900 may be the transmitting end or a function component in the transmitting end, or the data processing apparatus 900 may be the receiving end or a function component in the receiving end. The data processing apparatus 900 may implement the method embodiment shown in FIG. 10, FIG. 22, FIG. 24, or FIG. 25.

As shown in FIG. 29, the data processing apparatus 900 includes a processor 902, a memory 904, a communication interface 906, and a bus 908. The processor 902, the memory 904, and the communication interface 906 are communicatively connected through the bus 908. A connection manner between the processor 902, the memory 904, and the communication interface 906 shown in FIG. 29 is merely an example. In an implementation process, the processor 902, the memory 904, and the communication interface 906 may be connected in a connection manner other than the bus 908. This is not limited in this embodiment of this application.

The memory 904 is configured to store a computer program 9042. The computer program 9042 may include instructions and data. The memory 904 may be various types of storage media, for example, a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

The processor 902 may be a general-purpose processor or a dedicated processor. The general-purpose processor is a processor that performs a specific step and/or operation by reading and executing a computer program (for example, the computer program 9042) stored in a memory (for example, the memory 904). In a process of performing the foregoing step and/or operation, the general-purpose processor may use data stored in the memory (for example, the memory 904). The stored computer program may be executed to implement a related function of the processing unit 620, and the general-purpose processor may be a CPU. The dedicated processor is a processor specially designed to perform a specific step and/or operation. The dedicated processor may be a digital signal processor (digital signal processor, DSP), an ASIC, an FPGA, or the like. The processor 902 may alternatively be a combination of a plurality of processors, for example, a multicore processor. The processor 902 includes at least one circuit to perform all or a part of the steps in the method embodiments.

The communication interface 906 includes an interface that is configured to implement interconnection between components in the data processing apparatus 900, and an interface that is configured to implement interconnection between the data processing apparatus 900 and another device, such as an input/output (input/output, I/O) interface, a physical interface, and a logical interface. The physical interface may be a GE PHY interface or a TE PHY interface, and is configured to implement interconnection between the data processing apparatus 900 and another device. The logical interface is an interface inside the data processing apparatus 900, and is configured to implement interconnection between components in the data processing apparatus 900. The communication interface 906 may be used by the data processing apparatus 900 to communicate with another device, and the communication interface 906 may implement related functions of the transceiver unit 610 and the transceiver unit 710. The communication interface 906 may further include a transceiver for receiving and sending. The transceiver may also implement related functions of the transceiver unit 610 and the transceiver unit 710.

The bus 908 is any type of communication bus configured to implement interconnection between the processor 902, the memory 904, and the communication interface 906. The bus 908 may be a peripheral component interconnect (peripheral component interconnect, PCI) bus, an extended industry standard architecture (extended industry standard architecture, EISA) bus, or the like. The bus 908 may be classified into an address bus, a data bus, a control bus, and the like. For ease of representation, only one thick line is used in FIG. 29 for representation, but it does not indicate that there is only one bus or only one type of bus.

The foregoing components may be separately disposed on chips that are independent of each other, or at least a part or all of the components may be disposed on a same chip. Whether the components are separately disposed on different chips or integrated and disposed on one or more chips usually depends on a requirement of a product design. This embodiment of this application imposes no limitation on specific implementations of the foregoing components.

The data processing apparatus 900 shown in FIG. 29 is merely an example. In an implementation process, the data processing apparatus 900 may further include other components, which are not listed one by one in this specification. The data processing apparatus 900 shown in FIG. 29 performs all or a part of steps of the data processing method provided in the foregoing embodiments, to insert a pad sequence into a data stream or delete a pad sequence from a data stream.

Based on a same inventive concept, an embodiment of this application provides a communication system. The communication system includes a transmitting end and a receiving end. The transmitting end includes the data processing apparatus shown in FIG. 26, FIG. 28, or FIG. 29. The receiving end includes the data processing apparatus shown in FIG. 27, FIG. 28, or FIG. 29. For example, the communication system is shown in any one of FIG. 7 to FIG. 9.

Based on a same inventive concept, an embodiment of this application provides a computer-readable storage medium. The computer-readable storage medium stores a computer program. When the computer program is executed (for example, executed by a data processing apparatus, a FlexE shim, a pad processing module in the FlexE shim, or one or more processors), all or a part of the steps of the methods provided in the foregoing method embodiments are implemented.

Based on a same inventive concept, an embodiment of this application provides a computer program product. The computer program product includes a program or code. When the program or the code is executed (for example, executed by a data processing apparatus, a FlexE shim, a pad processing module in the FlexE shim, or one or more processors), all or a part of the steps of the methods provided in the foregoing method embodiments are implemented.

Based on a same inventive concept, an embodiment of this application provides a chip. The chip includes a programmable logic circuit and/or program instructions. When running, the chip is configured to implement all or a part of the steps of the methods provided in the foregoing method embodiments.

All or a part of the foregoing embodiments may be implemented by using software, hardware, firmware, or any combination thereof. When embodiments are implemented by using the software, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by the computer, or includes a data storage apparatus, such as a server or a data center, integrating one or more usable media. The usable medium may be a magnetic medium (for example, a floppy disk, a hard disk drive, or a magnetic tape), an optical medium, a semiconductor medium (for example, a solid-state drive), or the like.

It should be understood that in this application, the term "at least one" means one or more, and the term "a plurality of" means two or more. In this application, unless otherwise specified, the symbol "/" usually represents "or". For example, A/B represents A or B. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, the words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be mutually referenced. A sequence of the operations in the method embodiments can be properly adjusted, and the operations can be correspondingly added or deleted based on a situation. Any variation method that can be easily figured out by a person skilled in the art within the technical scope disclosed in this application shall fall within the protection scope of this application. Therefore, details are not described again.

In corresponding embodiments provided in this application, it should be understood that the disclosed apparatus and the like may be implemented in other composition manners. For example, the described apparatus embodiment is merely an example. For example, division into the modules and/or the units is merely logical function division and may be other division in actual implementation. For example, a plurality of modules, units, or components may be combined or integrated into another system, or some features may be ignored or not performed. In addition, the displayed or discussed mutual couplings or direct couplings or communication connections may be implemented by using some interfaces. The indirect couplings or communication connections between the apparatuses, modules, or units may be implemented in electronic or other forms. The modules and/or units described as separate parts may be physically separate, or may not be physically separate. The parts described as modules and/or units may be physical modules and/or physical units, or may not be physical modules and/or physical units, may be located in one position, or may be distributed on a plurality of devices. A part or all of the modules and/or units may be selected based on an actual requirement, to achieve the objectives of the solutions of embodiments.

The foregoing descriptions are merely example implementations of this application, but are not intended to limit the protection scope of this application. Any equivalent modification or replacement readily conceived by a person skilled in the art within the technical scope disclosed in this application shall fall within the protection scope of this application. Therefore, the protection scope of this application shall be subject to the protection scope of the claims.

## Claims

1. A data processing method, applied to the flexible Ethernet FlexE, wherein the method comprises:
receiving an initial data stream sent by a FlexE instance; and
periodically inserting a pad sequence into the initial data stream, to obtain a first data stream, wherein the first data stream comprises the pad sequence that periodically appears, the pad sequence comprises n consecutive pad blocks, and n is an integer greater than or equal to 4.

2. A data processing method, applied to the flexible Ethernet FlexE, wherein the method comprises:
receiving an initial data stream, wherein the initial data stream is obtained by interleaving a plurality of data streams sent by a plurality of FlexE instances; and
periodically inserting a pad sequence into the initial data stream, to obtain a first data stream, wherein the first data stream comprises the pad sequence that periodically appears, the pad sequence comprises n consecutive pad blocks, and n is an integer greater than or equal to 16.

3. The method according to claim 1 or 2, wherein
the n pad blocks comprise x first pad blocks and y second pad blocks, the first pad block is a control block that is globally unique in the first data stream, the second pad block is an error error block, x is a positive integer, and y is a positive integer.

4. The method according to claim 3, wherein
the x first pad blocks and the y second pad blocks satisfy any one of the following:
x=1, y=n-1, the y second pad blocks are located after the first pad block, and the y second pad blocks are consecutive to the first pad block;
n is an even number, x=y=n/2, the y second pad blocks are located after the x first pad blocks, and the y second pad blocks are consecutive to the x first pad blocks;
n is an even number, x=y=n/2, the pad sequence comprises n/2 block groups, each block group comprises one first pad block and one second pad block, the second pad block is located after the first pad block and is consecutive to the first pad block in each block group, and pad blocks in the n/2 block groups are consecutive; or
the x first pad blocks comprise x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x1 and x2 are both positive integers.

5. The method according to claim 3, wherein
the n pad blocks further comprise z third pad blocks, and z is a positive integer; and
the y second pad blocks are located after the x first pad blocks and before the z third pad blocks, and the x first pad blocks, the y second pad blocks, and the z third pad blocks are consecutive; or
the z third pad blocks are located after the x first pad blocks and before the y second pad blocks, and the x first pad blocks, the z third pad blocks, and the y second pad blocks are consecutive.

6. The method according to claim 5, wherein the third pad block is a data block.

7. The method according to claim 5 or 6, wherein the third pad block comprises at least one block identifier.

8. The method according to claim 7, wherein the third pad block further comprises at least one check identifier, and the at least one check identifier is used to check correctness of the at least one block identifier.

9. The method according to claim 8, wherein
a quantity of the at least one block identifier is equal to a quantity of the at least one check identifier; or
a sum of the quantity of the at least one block identifier and a quantity of the at least one check identifier is an odd number.

10. A data processing method, applied to the flexible Ethernet FlexE, wherein the method comprises:
obtaining a first data stream, wherein the first data stream is one of a plurality of data streams obtained by de-interleaving, the first data stream comprises a pad sequence that periodically appears, the pad sequence comprises n consecutive pad blocks, and n is an integer greater than or equal to 4;
searching the first data stream for a pad block, to find the pad sequence; and
when a plurality of pad blocks consecutively found in the first data stream satisfy a preset condition, determining that the pad sequence is found, wherein the preset condition comprises: a quantity of the plurality of pad blocks is greater than a preset threshold, and the quantity of the plurality of pad blocks is less than or equal to n.

11. A data processing method, applied to the flexible Ethernet FlexE, wherein the method comprises:
obtaining a first data stream, wherein the first data stream is obtained by periodically inserting a pad sequence into an initial data stream, the initial data stream is obtained by interleaving a plurality of data streams sent by a plurality of FlexE instances, the first data stream comprises the pad sequence that periodically appears, the pad sequence comprises n consecutive pad blocks, and n is an integer greater than or equal to 16;
searching the first data stream for a pad block, to find the pad sequence; and
when a plurality of pad blocks consecutively found in the first data stream satisfy a preset condition, determining that the pad sequence is found, wherein the preset condition comprises: a quantity of the plurality of pad blocks is greater than a preset threshold, and the quantity of the plurality of pad blocks is less than or equal to n.

12. The method according to claim 10 or 11, wherein
the n pad blocks comprise x first pad blocks and y second pad blocks, the first pad block is a control block that is globally unique in the first data stream, the second pad block is an error error block, x is a positive integer, and y is a positive integer.

13. The method according to claim 12, wherein
the x first pad blocks and the y second pad blocks satisfy any one of the following:
x=1, y=n-1, the y second pad blocks are located after the first pad block, and the y second pad blocks are consecutive to the first pad block;
n is an even number, x=y=n/2, the y second pad blocks are located after the x first pad blocks, and the y second pad blocks are consecutive to the x first pad blocks;
n is an even number, x=y=n/2, the pad sequence comprises n/2 block groups, each block group comprises one first pad block and one second pad block, the second pad block is located after the first pad block and is consecutive to the first pad block in each block group, and pad blocks in the n/2 block groups are consecutive; or
the x first pad blocks comprise x1 first pad blocks and x2 first pad blocks, the y second pad blocks are located between the x1 first pad blocks and the x2 first pad blocks, the x1 first pad blocks, the y second pad blocks, and the x2 first pad blocks are consecutive, x1+x2=x, and x1 and x2 are both positive integers.

14. The method according to claim 12, wherein
the n pad blocks further comprise z third pad blocks, and z is a positive integer; and
the y second pad blocks are located after the x first pad blocks and before the z third pad blocks, and the x first pad blocks, the y second pad blocks, and the z third pad blocks are consecutive; or
the z third pad blocks are located after the x first pad blocks and before the y second pad blocks, and the x first pad blocks, the z third pad blocks, and the y second pad blocks are consecutive.

15. The method according to claim 14, wherein the third pad block is a data block.

16. The method according to claim 14 or 15, wherein the third pad block comprises at least one block identifier.

17. The method according to claim 16, wherein the third pad block further comprises at least one check identifier, and the at least one check identifier is used to check correctness of the at least one block identifier.

18. The method according to claim 17, wherein
a quantity of the at least one block identifier is equal to a quantity of the at least one check identifier; or
a sum of the quantity of the at least one block identifier and a quantity of the at least one check identifier is an odd number.

19. The method according to any one of claims 10 to 18, wherein the n pad blocks comprise the x first pad blocks, the first pad block is a control block that is globally unique in the first data stream, and x is a positive integer; and
searching the first data stream for a pad block, to find the pad sequence comprises:
searching the first data stream for the first pad block; and
searching the first data stream for the pad sequence based on the first pad block found in the first data stream.

20. The method according to claim 19, wherein searching the first data stream for the pad sequence based on the first pad block found in the first data stream comprises:
determining n-1 blocks after the 1^{st} first pad block found in the first data stream, wherein the n-1 blocks are consecutive, and the n-1 blocks are consecutive to the 1^{st} first pad block; and
detecting the n-1 blocks, to find a pad block in the n-1 blocks, wherein the plurality of pad blocks consecutively found in the first data stream comprises the 1^{st} first pad block and the pad block found in the n-1 blocks.

21. A data processing apparatus, applied to the flexible Ethernet FlexE, wherein the apparatus comprises:
a transceiver unit, configured to perform a receiving and sending operation in the method according to any one of claims 1 to 9; and
a processing unit, configured to perform an operation other than the sending and receiving operation in the method according to any one of claims 1 to 9.

22. A data processing apparatus, applied to the flexible Ethernet FlexE, wherein the apparatus comprises:
a transceiver unit, configured to perform a receiving and sending operation in the method according to any one of claims 10 to 20; and
a processing unit, configured to perform an operation other than the sending and receiving operation in the method according to any one of claims 10 to 20.

23. A data processing apparatus, comprising a memory and a processor, wherein
the memory is configured to store a computer program; and
the processor is configured to execute the computer program stored in the memory, so that the data processing apparatus performs the method according to any one of claims 1 to 20.

24. A communication system, comprising a transmitting end and a receiving end, wherein the transmitting end comprises the data processing apparatus according to claim 21 or 23, and the receiving end comprises the data processing apparatus according to claim 22 or 23.

25. A computer-readable storage medium, wherein the computer-readable storage medium stores a computer program; and when the computer program is executed, the method according to any one of claims 1 to 20 is implemented.

26. A computer program product, wherein the computer program product comprises a program or code; and when the program or the code is executed, the method according to any one of claims 1 to 20 is implemented.

27. A chip, wherein when the chip runs, the method according to any one of claims 1 to 20 is implemented.
